# EUROPEAN PATENT APPLICATION

(11) **EP 4 734 047 A1**
(43) Date of publication of application: **29.04.2026**
(21) Application number: 24874847.7
(22) Date of filing: 12.08.2024
(51) Int. Cl.: G06T 5/77, G06T 11/60, G06F 3/14, G06F 3/0484, G06T 5/20

(54) **ELECTRONIC DEVICE, METHOD, AND NON-TRANSITORY COMPUTER-READABLE RECORDING MEDIUM FOR DETERMINING WHETHER TO FILL IMAGE**

(30) Priority: 06.10.2023 KR 20230133837; 15.11.2023 KR 20230158615
(71) Applicant: Samsung Electronics Co., Ltd., Suwon-si, Gyeonggi-do 16677 (KR)
(72) Inventor: JEONG, Moonhwan, Suwon-si Gyeonggi-do 16677 (KR); MOON, Chankyoo, Suwon-si Gyeonggi-do 16677 (KR); KIM, Gangseo, Suwon-si Gyeonggi-do 16677 (KR); KIM, Mansung, Suwon-si Gyeonggi-do 16677 (KR); KIM, Sangtae, Suwon-si Gyeonggi-do 16677 (KR); KIM, Sungwon, Suwon-si Gyeonggi-do 16677 (KR); NA, Jaekeun, Suwon-si Gyeonggi-do 16677 (KR); PARK, Sunmin, Suwon-si Gyeonggi-do 16677 (KR); AHN, Heebum, Suwon-si Gyeonggi-do 16677 (KR); LEE, Bohyun, Suwon-si Gyeonggi-do 16677 (KR); LEE, Jaeho, Suwon-si Gyeonggi-do 16677 (KR); HUR, Youngjin, Suwon-si Gyeonggi-do 16677 (KR); CHOE, Jihwan, Suwon-si Gyeonggi-do 16677 (KR); MUN, Jihun, Suwon-si Gyeonggi-do 16677 (KR)
(74) Representative: HGF
(86) International application number: PCT/KR2024/011988
(87) International publication number: WO 2025/075288

(57) **Abstract**

An electronic device is disclosed. The electronic device may comprise a display. The electronic device may comprise a processor. The electronic device may comprise a memory for storing instructions. The electronic device may obtain a resulting image generated by filling an input image, on the basis of a first ratio at which an object exists in the input image being greater than or equal to a first reference ratio. The electronic device may cause the resulting image to refrain from being displayed through the display on the basis of a second ratio of a newly filled portion of the object exceeding a second reference ratio. The electronic device may display the resulting image through the display on the basis of the second ratio being equal to or less than the second reference ratio.

## Description

### [Technical Field]

The following descriptions relate to an electronic device, a method, and a non-transitory computer readable recording medium for determining whether to fill an image.

### [Background Art]

An electronic device may provide multiple functions. For example, the electronic device may generate an image based on a prompt. For example, the electronic device may generate an image based on an object inputted as the prompt. For example, the electronic device may fill an external area of an image inputted as the prompt (e.g., out-painting) or newly fill an internal area of the image (e.g., in-painting).

### [Disclosure]

### [Technical Solution]

An electronic device is disclosed. The electronic device may comprise a display. The electronic device may comprise a processor. The electronic device may comprise memory storing instructions. The instructions may be configured, when executed by the processor, to cause the electronic device to obtain a result image generated by filling processing for an input image, based on that a first ratio of an object present in the input image is greater than or equal to a first reference ratio. The instructions may be configured, when executed by the processor, to cause the electronic device to refrain from displaying the result image through the display based on that a second ratio of a newly filled portion of the object exceeds a second reference ratio. The instructions may be configured, when executed by the processor, to cause the electronic device to, based on that the second ratio is less than or equal to the second reference ratio, display the result image through the display.

An electronic device is disclosed. The electronic device may comprise a display. The electronic device may comprise a processor. The electronic device may comprise memory storing instructions. The instructions may be configured, when executed by the processor, to cause the electronic device to obtain a first anomaly value of an input image through a first anomaly detection module. The first anomaly detection module may be trained by images in which a first ratio of an object is greater than or equal to a first reference ratio. The instructions may be configured, when executed by the processor, to cause the electronic device to obtain a result image generated by filling processing for the input image, based on that the first anomaly value of the input image is less than or equal to a first reference anomaly value. The instructions may be configured, when executed by the processor, to cause the electronic device to obtain a second anomaly value of the result image through a second anomaly detection module. The second anomaly detection module may be trained by images in which a second ratio of an object is greater than or equal to a specified second reference ratio. The instructions may be configured, when executed by the processor, to cause the electronic device to refrain from displaying the result image through the display based on that the second anomaly value is greater than or equal to a second reference anomaly value. The instructions may be configured, when executed by the processor, to cause the electronic device to, based on that the second anomaly value is less than the second reference anomaly value, display the result image through the display.

A method is disclosed. The method may be executed in an electronic device including a display. The method may comprise obtaining a result image generated by filling processing for an input image, based on that a first ratio of an object present in the input image is greater than or equal to a first reference ratio. The method may comprise refraining from displaying the result image through the display based on that a second ratio of a newly filled portion of the object exceeds a second reference ratio. The method may comprise, based on that the second ratio is less than or equal to the second reference ratio, displaying the result image through the display.

A method is disclosed. The method may be executed in an electronic device including a display. The method may comprise obtaining a first anomaly value of an input image through a first anomaly detection module. The first anomaly detection module may be trained by images in which a first ratio of an object is greater than or equal to a first reference ratio. The method may comprise obtaining a result image generated by filling processing for the input image, based on that the first anomaly value of the input image is less than or equal to a first reference anomaly value. The method may comprise obtaining a second anomaly value of the result image through a second anomaly detection module. The second anomaly detection module may be trained by images in which a second ratio of an object is greater than or equal to a specified second reference ratio. The method may comprise refraining from displaying the result image through the display based on that the second anomaly value is greater than or equal to a second reference anomaly value. The method may comprise, based on that the second anomaly value is less than the second reference anomaly value, displaying the result image through the display.

A non-transitory computer readable recording medium is disclosed. The non-transitory computer readable recording medium may store a program including instructions. The instructions may be configured, when executed by a processor of an electronic device including a display, to cause the electronic device to obtain a result image generated by filling processing for an input image, based on that a first ratio of an object present in the input image is greater than or equal to a first reference ratio. The instructions may be configured, when executed by the processor, to cause the electronic device to refrain from displaying the result image through the display based on that a second ratio of a newly filled portion of the object exceeds a second reference ratio. The instructions may be configured, when executed by the processor, to cause the electronic device to, based on that the second ratio is less than or equal to the second reference ratio, display the result image through the display.

A non-transitory computer readable recording medium is disclosed. The non-transitory computer readable recording medium may store a program including instructions. The instructions may be configured, when executed by a processor of an electronic device including a display, to cause the electronic device to obtain a first anomaly value of an input image through a first anomaly detection module. The first anomaly detection module may be trained by images in which a first ratio of an object is greater than or equal to a first reference ratio. The instructions may be configured, when executed by the processor, to cause the electronic device to obtain a result image generated by filling processing for the input image, based on that the first anomaly value of the input image is less than or equal to a first reference anomaly value. The instructions may be configured, when executed by the processor, to cause the electronic device to obtain a second anomaly value of the result image through a second anomaly detection module. The second anomaly detection module may be trained by images in which a second ratio of an object is greater than or equal to a specified second reference ratio. The instructions may be configured, when executed by the processor, to cause the electronic device to refrain from displaying the result image through the display based on that the second anomaly value is greater than or equal to a second reference anomaly value. The instructions may be configured, when executed by the processor, to cause the electronic device to, based on that the second anomaly value is less than the second reference anomaly value, display the result image through the display.

### [Description of the Drawings]

FIG. 1 is a block diagram of an electronic device in a network environment according to various embodiments.
FIG. 2A is a block diagram of components in an electronic device for determining whether to fill an image.
FIG. 2B is a block diagram of components in an electronic device for determining whether to fill an image based on condition determination.
FIG. 2C is a block diagram of components in an electronic device for determining whether to fill an image based on whether to perform anomaly detection.
FIG. 3A is a diagram illustrating an example of an input image.
FIG. 3B is a diagram illustrating an example of an input image.
FIG. 3C is a diagram illustrating an example of an input image.
FIG. 3D is a diagram illustrating an example of a landmark.
FIG. 3E is a diagram illustrating an example of a landmark.
FIG. 3F is a diagram illustrating an example of an input image.
FIG. 4A is a diagram illustrating an example of a result image.
FIG. 4B is a diagram illustrating an example of a result image.
FIG. 4C is a diagram illustrating an example of a result image.
FIG. 4D is a diagram illustrating an example of a result image.
FIG. 5 is a block diagram of components of an electronic device and a server for generating a result image.
FIG. 6A is a diagram illustrating an example of an input image and a masking area.
FIG. 6B is a diagram illustrating an example of an image for a masking area transmitted from a server to an electronic device.
FIG. 6C is a diagram illustrating an example of a result image combined by an electronic device.
FIG. 7A is a diagram illustrating an example of an input for an object included in an input image.
FIG. 7B is a diagram illustrating an example of a masking area and a result image determined according to an input.
FIG. 7C is a diagram illustrating an example of a masking area and a result image determined according to an input.
FIG. 8A is a diagram illustrating an example of an input for an object included in an input image.
FIG. 8B is a diagram illustrating an example of a masking area and a result image determined according to an input.
FIG. 8C is a diagram illustrating an example of a masking area and a result image determined according to an input.
FIG. 8D is a diagram illustrating an example of a masking area and a result image determined according to an input.
FIG. 9 is a flowchart exemplifying an operation of an electronic device according to an embodiment.
FIG. 10 is a flowchart exemplifying an operation of an electronic device according to an embodiment.
FIG. 11 is a flowchart exemplifying an operation of an electronic device according to an embodiment.
FIG. 12 is a flowchart exemplifying an operation of an electronic device according to an embodiment.
FIG. 13 is a flowchart exemplifying an operation of an electronic device according to an embodiment.
FIG. 14 is a flowchart exemplifying an operation of an electronic device according to an embodiment.

### [Mode for Invention]

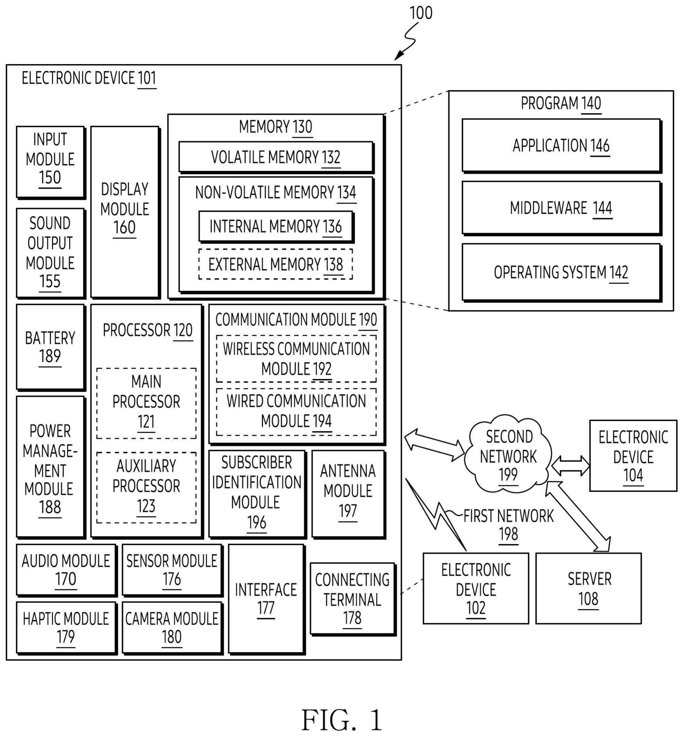

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

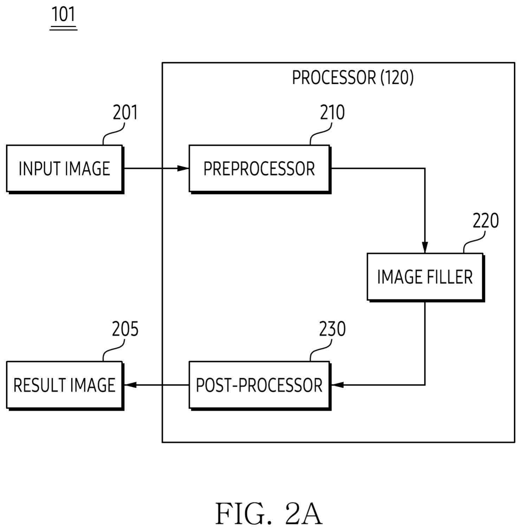

FIG. 2A is a block diagram of components in an electronic device 101 for determining whether to fill an image.

Referring to FIG. 2A, the electronic device 101 may include a preprocessor 210, an image filler 220, and a post-processor 230. In an embodiment, the preprocessor 210, the image filler 220, and the post-processor 230 may be included in a program 140 of the electronic device 101.

In an embodiment, the preprocessor 210 may determine whether to perform filling processing for an input image 201. In an embodiment, the filling processing may be processing that newly generates an image in a masking area related to the input image 201. For example, the filling processing may include in-painting processing that newly draws an image in a masking area selected inside the input image 201. For example, the filling processing may include out-painting processing that newly draws an image in a masking area selected outside the input image 201.

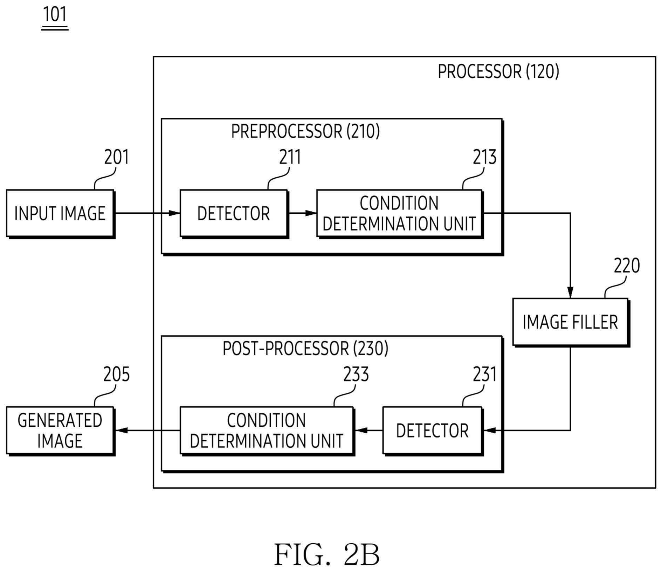

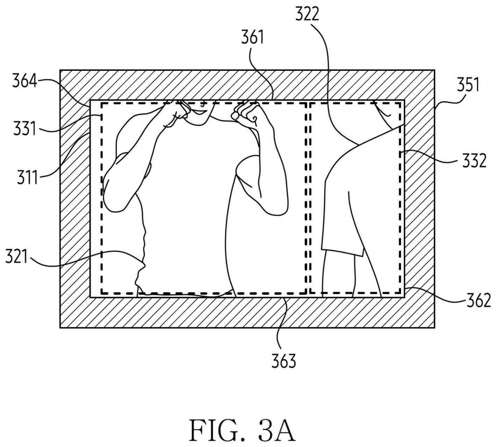

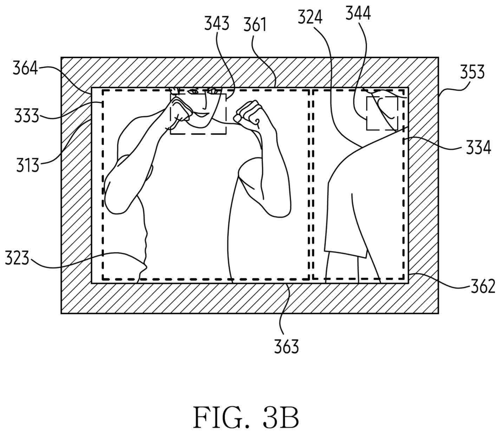

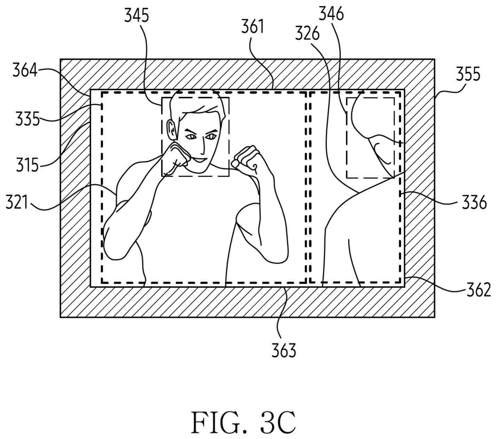

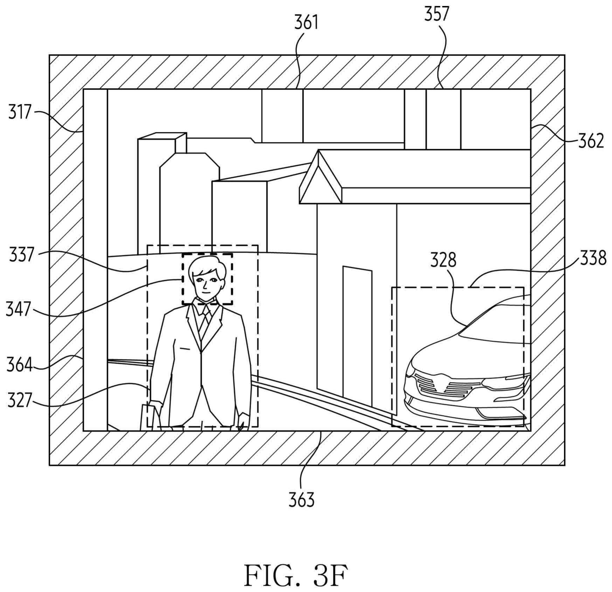

In an embodiment, the preprocessor 210 may determine whether to perform the filling processing for the input image 201 based on whether the input image 201 satisfies a specified condition. In an embodiment, the specified condition may be related to a state of one or more objects included in the input image 201. For example, the state of the object may include a size and/or a ratio of an object in the input image 201. In an embodiment, an operation in which the preprocessor 210 determines whether the input image 201 satisfies the specified condition may be described with reference to FIGS. 2B, 3A, 3B, 3C, and 3F.

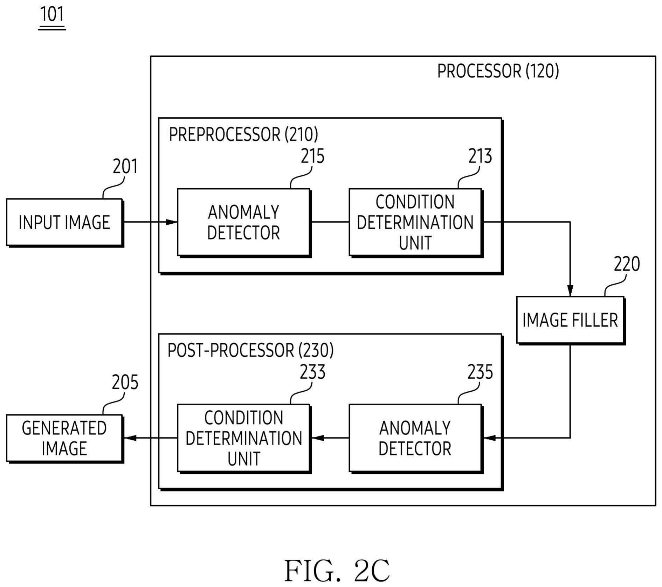

In an embodiment, the preprocessor 210 may determine whether to perform the filling processing for the input image 201 based on whether an anomaly rate detected for the input image 201 exceeds a specified first reference anomaly rate. In an embodiment, an anomaly value of the input image 201 may be obtained by an anomaly detector. In an embodiment, the anomaly detector may be described with reference to FIG. 2C.

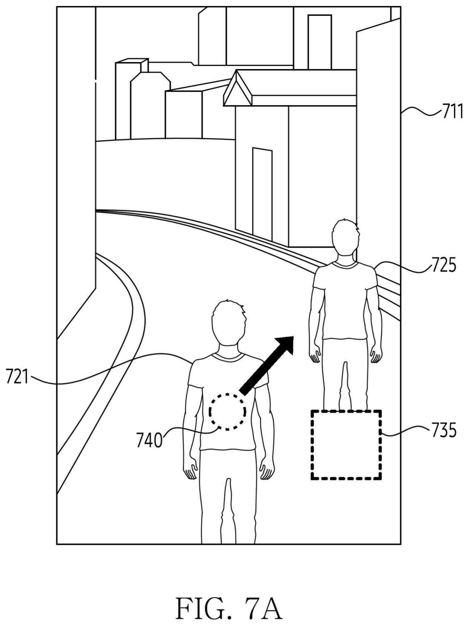

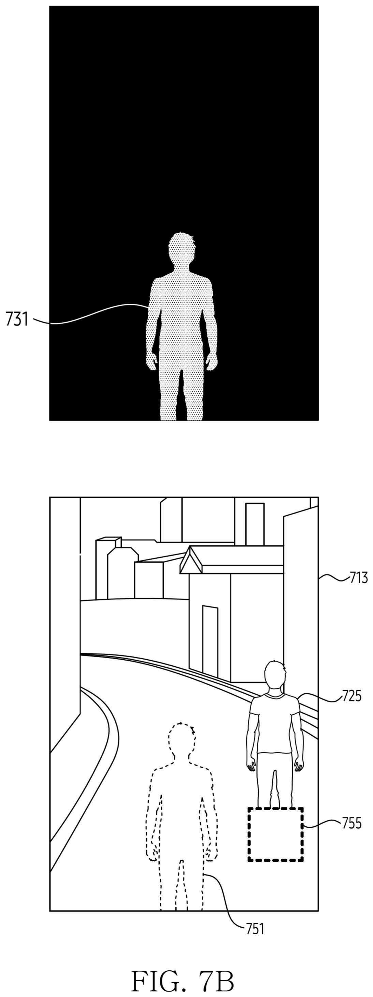

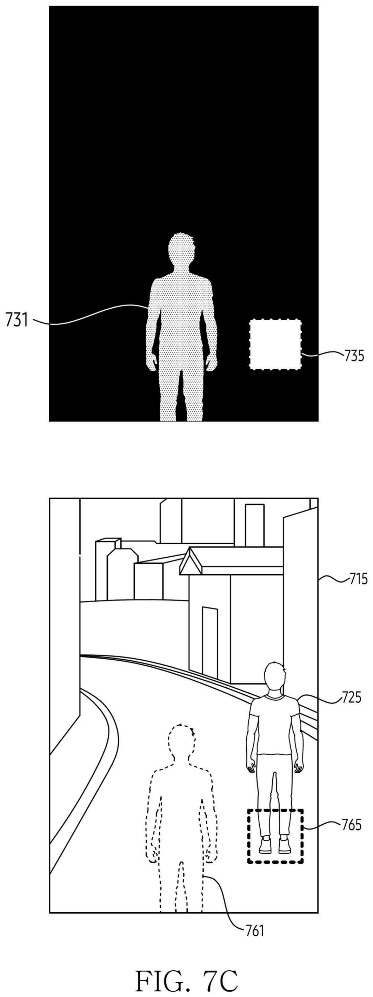

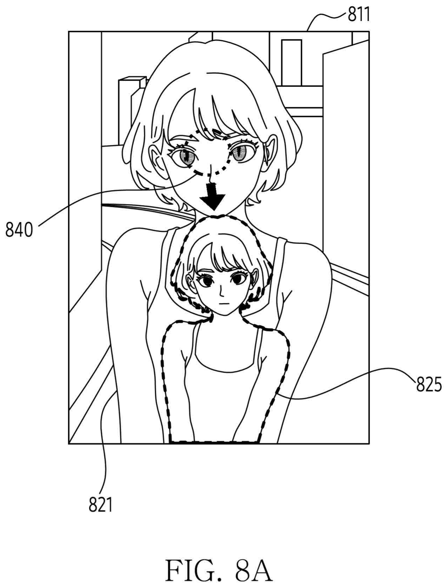

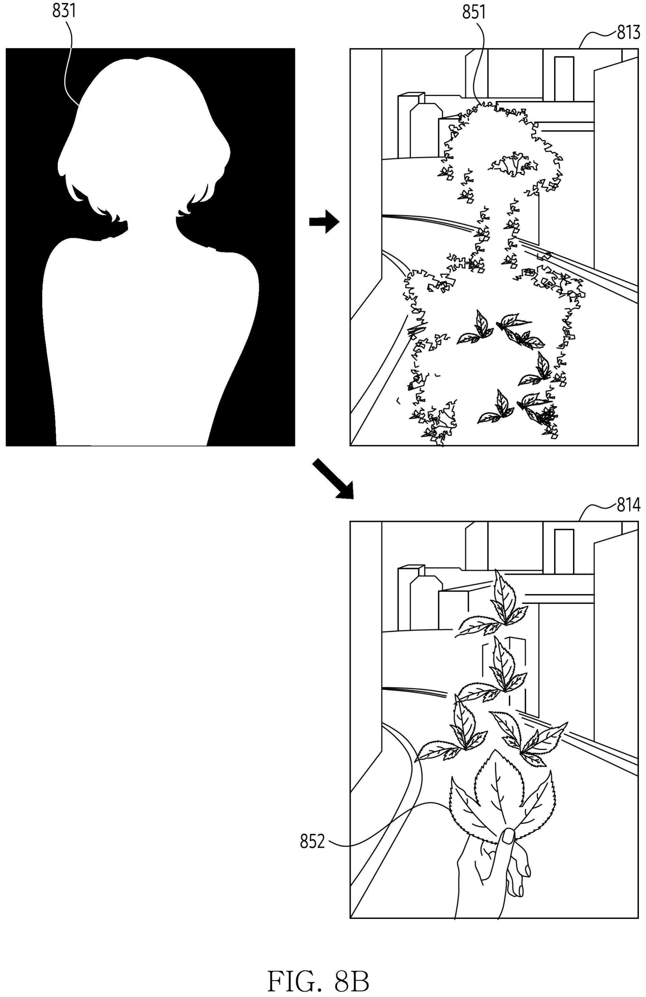

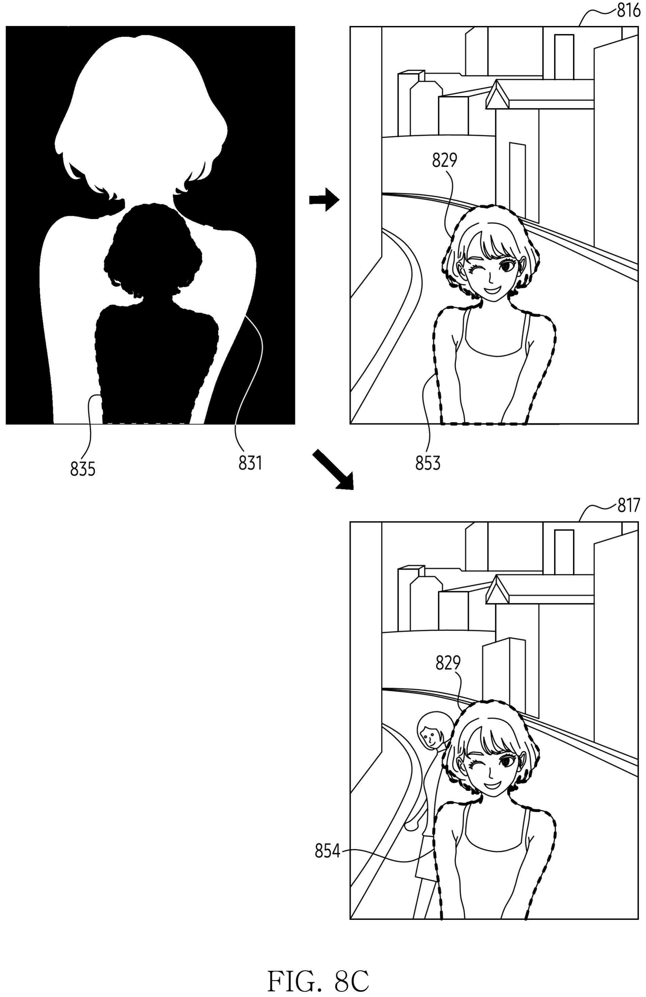

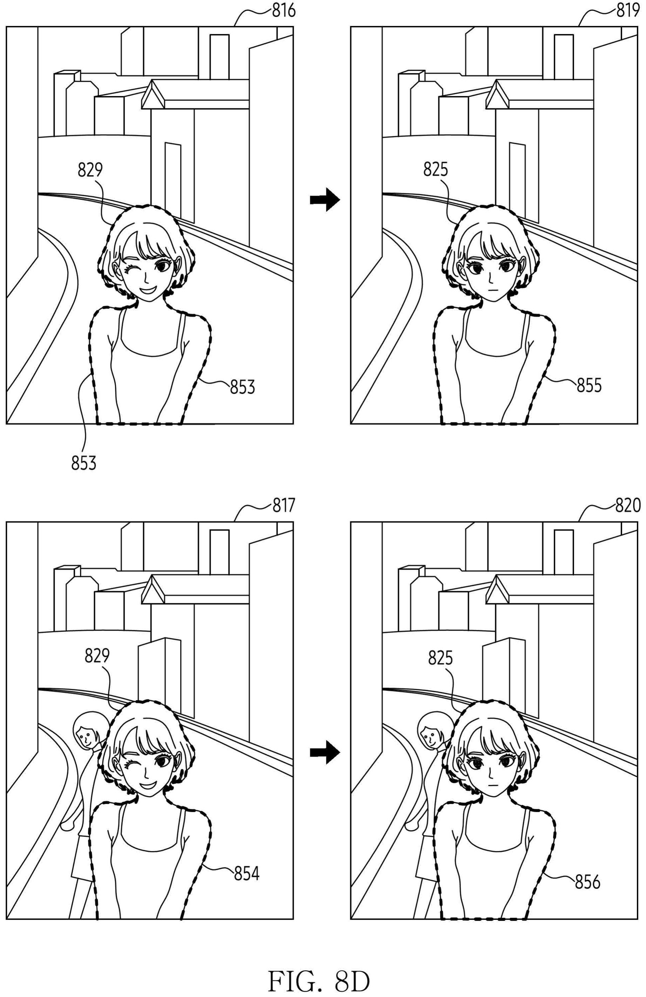

In an embodiment, the preprocessor 210 may set a masking area related to the input image 201. In an embodiment, the preprocessor 210 may set a masking area outside the input image 201 and/or a masking area inside the input image 201 based on an input. In an embodiment, the preprocessor 210 may set a masking area related to an object selected based on a user input for the input image 201. For example, the masking area may be an area of the object selected in the input image 201. For example, the masking area may be an area in which the object selected in the input image 201 is moved. For example, the masking area may be an area adjacent to an area in which the object selected in the input image 201 is moved. For example, in a case that the object selected in the input image 201 is positioned in a periphery (e.g., a side) of the input image 201, an area extending from an area in which the selected object is moved to a direction of the side may be the masking area. However, it is not limited thereto. In an embodiment, the preprocessor 210 may set a masking area to enlarge a size of the input image 201. For example, the masking area may be an area extending in a direction of a selected side among one or more sides of the input image 201. The masking area set by the preprocessor 210 may be described with reference to FIGS. 7A, 7B, 7C, 8A, 8B, 8C, and 8D.

In an embodiment, the image filler 220 may include a generative artificial intelligence (AI) model. In an embodiment, the generative AI model may be a model capable of newly drawing an image in a masking area based on the input image 201. For example, the generative AI model may newly draw an image in the masking area related to the input image 201 based on at least one prompt. Herein, the prompt may include at least one keyword related to the input image 201. The prompt may include at least one keyword that may be extracted from the input image 201. Herein, the keyword may be a word (or a sentence) for describing the input image 201 and/or at least one object included in the input image 201. In an embodiment, the keyword may be extracted from the image filler 220. However, it is not limited thereto. For example, the keyword may be extracted from the preprocessor 210. In an embodiment, the preprocessor 210 may transmit data on the input image 201, the masking area, and the keyword to the image filler 220.

In an embodiment, the image filler 220 may generate a result image 205 for the input image 201 based on the generative AI model. In an embodiment, the result image 205 may include a partial image (or a filled image) generated by the masking area. In an embodiment, the result image 205 may include the partial image (or the filled image) and the input image 201.

In an embodiment, the image filler 220 may transmit the result image 205 to the post-processor 230.

In an embodiment, the post-processor 230 may determine whether to output the result image 205. In an embodiment, the post-processor 230 may determine whether to output the result image 205 through a display module 160.

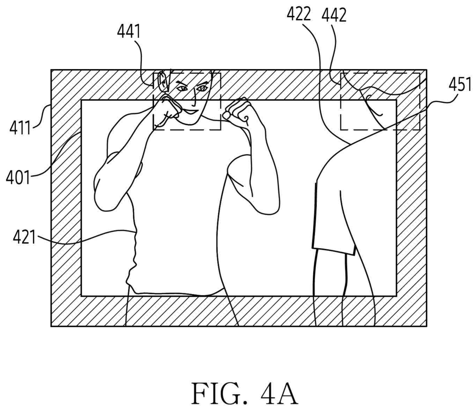

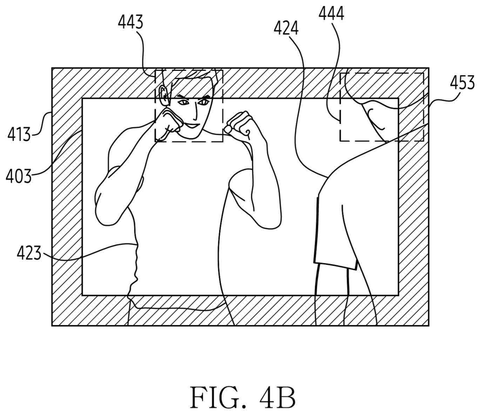

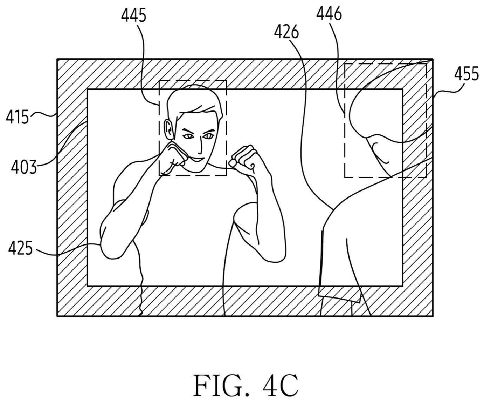

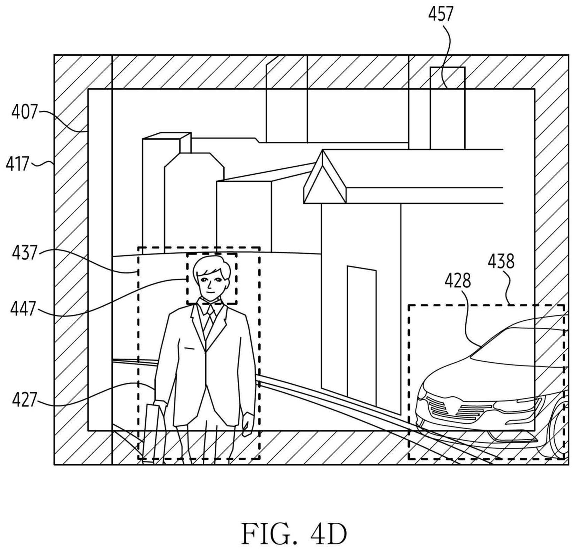

In an embodiment, the post-processor 230 may determine whether to output the result image 205 based on whether the result image 205 satisfies a specified condition. In an embodiment, the specified condition may be related to a state of one or more objects included in the result image 205. For example, the state of the object may include a size and/or a ratio of the object in the result image 205. In an embodiment, an operation in which the post-processor 230 determines whether the result image 205 satisfies the specified condition may be described with reference to FIGS. 2B, 4A, 4B, 4C, and 4D.

In an embodiment, the post-processor 230 may determine whether to output the result image 205 based on whether an anomaly value detected for the result image 205 exceeds a specified second reference anomaly value. In an embodiment, the anomaly value for the result image 205 may be obtained by the anomaly detector. In an embodiment, the anomaly detector may be described with reference to FIG. 2C.

In an embodiment, the post-processor 230 may determine whether to store the result image 205. For example, the post-processor 230 may determine whether to store the result image 205 based on whether the result image 205 satisfies a specified condition. For example, the post-processor 230 may determine whether to store the result image 205 based on whether the anomaly value detected for the result image 205 exceeds the specified second reference anomaly value.

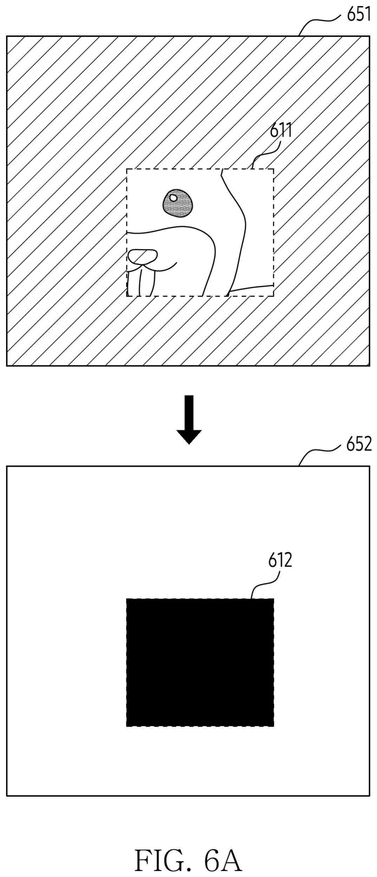

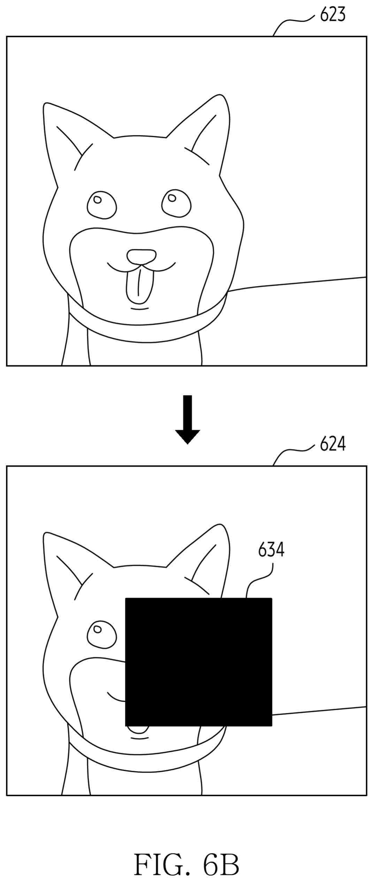

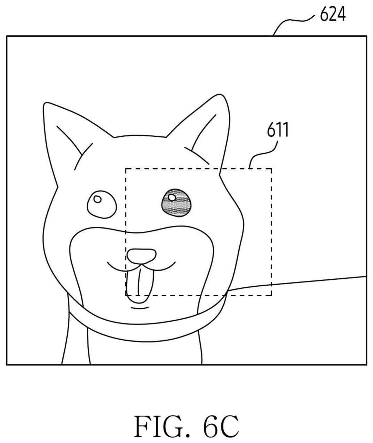

In an embodiment, the post-processor 230 may combine the input image 201 with the result image 205. In an embodiment, the post-processor 230 may combine the input image 201 with a remaining portion of the result image 205 excluding a portion generated by the masking area. In an embodiment, the post-processor 230 may combine at least a partial area of the input image 201 with the remaining portion of the result image 205 excluding the portion generated by the masking area. The combination between the result image 205 and the input image 201 may be described with reference to FIGS. 6A, 6B, 6C, and 8D.

FIG. 2B is a block diagram of components in an electronic device 101 for determining whether to fill an image based on condition determination.

Referring to FIG. 2B, the electronic device 101 may include one or more detectors 211 and 231 and one or more condition determination units 213 and 233.

In an embodiment, the detector 211 of a preprocessor 210 may identify an object in an input image 201. In an embodiment, the detector 211 may identify an area including an object. In an embodiment, the detector 211 may identify a bounding box including an object. In an embodiment, the bounding box may be a virtual box formed in a substantially rectangular shape including the identified object. In an embodiment, the bounding box may be the smallest size box that may include the identified object. In an embodiment, the bounding box is not limited to a rectangular shape and may be formed in various shapes. In an embodiment, the bounding box may be referred to as a segmentation or a convex hull including the identified object.

In an embodiment, the detector 211 may identify a specified portion of the object in the input image 201. For example, in a case that the object is a human, the specified portion of the object may be a body portion of the human (e.g., a face, eyes, a nose, a mouth, ears, arms, or hands). For example, in a case that the object is an animal, the specified portion of the object may be a body portion of the animal (e.g., a head, eyes, a nose, a mouth, ears, or legs). For example, in a case that the object is an article, the specified portion of the object may be a portion of a component of the article (e.g., in a case of a car, a bonnet, a wheel, a window, or a door). However, it is not limited thereto.

In an embodiment, the detector 211 may include one or more detectors for identifying different types of objects. In an embodiment, based on a type of the identified object being different from a human or a body portion of the human (e.g., a face), the detector 211 may identify an object based on a detector for identifying a different type of object other than the human or a body portion of the human.

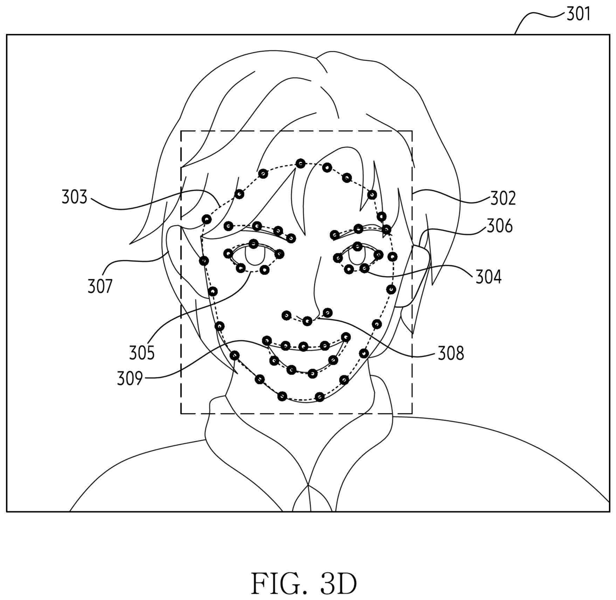

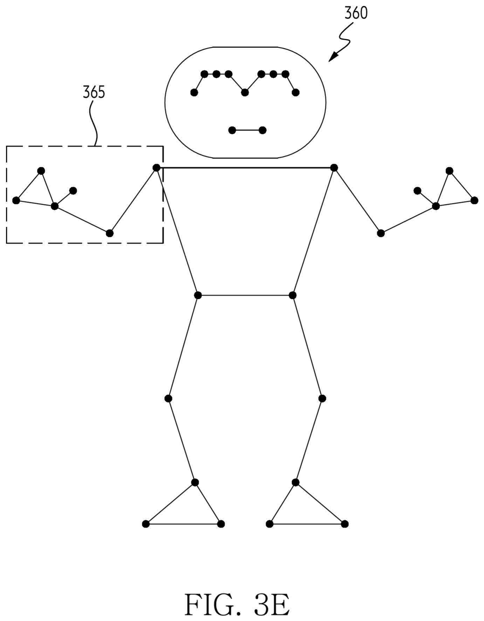

In an embodiment, the detector 211 may identify an object and/or a specified portion of the object based on one or more landmarks of the object in the input image 201. In an embodiment, the identification of the object and/or the specified portion of the object may be described with reference to FIGS. 3D and 3E.

In an embodiment, the detector 211 may identify an area including the specified portion of the object. In an embodiment, the detector 211 may identify a bounding box including at least a portion of the specified portion of the object.

In an embodiment, the condition determination unit 213 of the preprocessor 210 may determine whether to perform filling processing for the input image 201 based on the bounding box. In an embodiment, the condition determination unit 213 may determine whether to perform the filling processing for the input image 201 according to a type of object included in the bounding box.

In an embodiment, the condition determination unit 213 may determine whether to perform the filling processing for the input image 201 based on the first number of bounding boxes for identified one or more objects and the second number of bounding boxes for a specified portion of each of the identified one or more objects. In an embodiment, in a case that the second number of bounding boxes of a face is greater than or equal to the first number of bounding boxes of a body, the condition determination unit 213 may determine to perform the filling processing for the input image 201. In an embodiment, in a case that the second number of bounding boxes of the face is less than the first number of bounding boxes of the body, the condition determination unit 213 may determine not to perform the filling processing for the input image 201.

In an embodiment, the condition determination unit 213 may determine whether to perform the filling processing for the input image 201 based on a state of the bounding box for the specified portion of each of the identified one or more objects. In an embodiment, the state of the bounding box may include a size of the bounding box and/or a ratio of the bounding box. For example, the ratio of the bounding box may mean a ratio between a total size of the bounding box and a size of an area of a bounding box positioned in the input image 201. For example, the ratio of the bounding box may mean a ratio between a size of a bounding box positioned in a masking area and a size of an area of a bounding box positioned in the input image 201. For example, the ratio of the bounding box may mean a ratio of a landmark included in the bounding box (or included in the input image 201) among specified landmarks of the object or the specified portion of the object. For example, in a case that the object is a human, a specified landmark of the human may be a nose, eyes, ears, a mouth, shoulders, elbows, wrists, fingers, hips, knees, ankles, heels, and/or feet. For example, in a case that the specified portion of the object is a face of the human, a specified landmark of the face may be a nose, eyes, ears, and/or a mouth. However, it is not limited thereto.

In an embodiment, the condition determination unit 213 may determine whether to perform the filling processing for the input image 201 based on comparing a ratio of the bounding box for each of the identified one or more objects with a specified first ratio. In an embodiment, in a case that a ratio of a bounding box for all objects is greater than or equal to the specified first ratio, the condition determination unit 213 may determine to perform the filling processing for the input image 201. In an embodiment, in a case that a ratio of a bounding box for at least one object among the objects is less than the specified first ratio, the condition determination unit 213 may determine not to perform the filling processing for the input image 201. In an embodiment, the first ratio may be set differently according to an object. In an embodiment, the first ratio for a human, an animal, or an article may be different. For example, the first ratio for a human, a dog, or a car may be 80%, 40%, or 20%. In an embodiment, the first ratio may be predetermined according to difficulty of the filling processing. For example, in a case that the difficulty of the filling processing is high, it may have the higher first ratio.

In an embodiment, the condition determination unit 213 may determine whether to perform the filling processing for the input image 201 based on comparing a ratio of the bounding box for the specified portion of each of the identified one or more objects with the specified first ratio. In an embodiment, in a case that a ratio of a bounding box for all specified portions is greater than or equal to the specified first ratio, the condition determination unit 213 may determine to perform the filling processing for the input image 201. In an embodiment, in a case that a ratio of a bounding box for at least one specified portion of the specified portions is less than the specified first ratio, the condition determination unit 213 may determine not to perform the filling processing for the input image 201. In an embodiment, the first ratios may be set differently according to an object and/or a specified portion of the object. In an embodiment, the first ratio for a specified portion of a human, an animal, or an article may be different. For example, the first ratio for a face of the human and a hand of the human, or a shoulder of the human may be 60%, 90%, or 20%. However, it is not limited thereto. In an embodiment, the first ratio may be predetermined according to the difficulty of the filling processing. In an embodiment, the difficulty of the filling processing may depend on whether identity between an image before the filling processing and an image after the filling processing is recognized. For example, in a case of an object (e.g., a face of a human) that is recognized as having low identity as a ratio of an area newly generated according to the filling processing increases, the difficulty of the filling processing may be understood to be high. For example, in a case that the difficulty of the filling processing is high, the first ratio may have a higher ratio. For example, the first ratio for a human, a dog, or a car may be 50%, 60%, or 20%.

In an embodiment, based on a comparison result between the first number of bounding boxes for the identified one or more objects and the second number of bounding boxes for the specified portion of each of the identified one or more objects, and the state of the bounding box for the specified portion of each of the identified one or more objects, the condition determination unit 213 may determine whether to perform the filling processing for the input image 201. In an embodiment, in a case that the second number of bounding boxes of the face is less than the first number of bounding boxes of the body, the condition determination unit 213 may determine not to perform the filling processing for the input image 201. In an embodiment, in a case that the ratio of the bounding box for at least one object among the objects is less than the specified first ratio, the condition determination unit 213 may determine not to perform the filling processing for the input image 201. In an embodiment, in a case that the second number of bounding boxes of the face is greater than or equal to the first number of bounding boxes of the body, and a ratio of the bounding box of the face is greater than or equal to the specified first ratio, the condition determination unit 213 may determine to perform the filling processing for the input image 201.

In an embodiment, the condition determination unit 213 may determine whether to perform the filling processing for the input image 201 based on whether the bounding box of each of the identified one or more objects is positioned at a boundary (or a side) of the input image 201. In an embodiment, the condition determination unit 213 may determine whether to perform the filling processing for the input image 201 based on whether a bounding box of a specified object (e.g., a head) among the identified one or more objects is positioned at a boundary (or a side) of the input image 201. For example, in a case that the bounding box of the specified object (e.g., the head) is positioned at a specified boundary (or side) of the input image 201 (e.g., an upper, left, or right boundary of the input image 201), it may determine not to perform the filling processing for the input image 201.

In an embodiment, the condition determination unit 213 may determine whether to perform the filling processing for the input image 201 based on whether the bounding box of each of the identified one or more objects is positioned at a boundary (or a side) of a masking area inside the input image 201. In an embodiment, the condition determination unit 213 may determine whether to perform the filling processing for the input image 201 based on whether the bounding box of the specified object (e.g., the head) among the identified one or more objects is positioned at a boundary (or a side) of the masking area inside the input image 201. For example, in a case that the bounding box of the specified object (e.g., the head) is positioned at a specified boundary (or side) of the masking area inside the input image 201, it may determine not to perform the filling processing for the input image 201.

In an embodiment, in order to reduce latency, the condition determination unit 213 may first identify whether the bounding box of each of the identified one or more objects is positioned at the boundary (or the side) of the input image 201. In a case that one bounding box among the identified one or more objects is positioned at the boundary (or the side) of the input image 201, the condition determination unit 213 may identify whether the one bounding box includes a specified object (e.g., a face). In an embodiment, in a case that one bounding box positioned at the boundary and including the specified object (e.g., the face) is identified, the condition determination unit 213 may determine not to perform the filling processing for the input image 201.

In an embodiment, in order to reduce latency, the condition determination unit 213 may first identify whether the bounding box of each of the identified one or more objects is positioned at the boundary (or the side) of the masking area of the input image 201. In a case that one bounding box among the identified one or more objects is positioned at the boundary (or the side) of the masking area of the input image 201, the condition determination unit 213 may identify whether the one bounding box includes the specified object (e.g., the face). In an embodiment, in a case that one bounding box positioned at the boundary and including the specified object (e.g., the face) is identified, the condition determination unit 213 may determine not to perform filling processing for the masking area inside the input image 201.

In an embodiment, the detector 231 of a post-processor 230 may identify an object in a result image 205. In an embodiment, the detector 231 may identify an area including an object. In an embodiment, the detector 231 may identify a bounding box including an object.

In an embodiment, the detector 231 may identify a specified portion of the object in the result image 205. In an embodiment, the detector 231 may identify an area including the specified portion of the object. In an embodiment, the detector 231 may identify a bounding box including the specified portion of the object. For example, in a case that the object is a human, the specified portion of the object may be a body portion of the human (e.g., a face, eyes, a nose, a mouth, ears, arms, or hands). For example, in a case that the object is an animal, the specified portion of the object may be a body portion of the animal (e.g., a head, eyes, a nose, a mouth, ears, or legs). For example, in a case that the object is an article, the specified portion of the object may be a portion of a component of the article (e.g., in a case of a car, a bonnet, a wheel, a window, or a door). However, it is not limited thereto.

In an embodiment, the condition determination unit 233 of the post-processor 230 may determine whether to output the result image 205 based on the bounding box.

In an embodiment, the condition determination unit 233 may determine whether to output the result image 205 based on a state of the bounding box for the identified one or more objects and/or a specified portion of each of the objects. In an embodiment, the state of the bounding box may include a size of the bounding box and/or a ratio of the bounding box. For example, the ratio of the bounding box may mean a ratio between a total size of the bounding box and a size of a bounding box positioned in a partial image (or a filled image) generated by a masking area.

In an embodiment, the condition determination unit 233 may determine whether to output the result image 205 based on comparing a ratio of the bounding box for each of the identified one or more objects with a specified second ratio. In an embodiment, in a case that a ratio of a bounding box for all objects is less than or equal to the specified second ratio, the condition determination unit 233 may determine to output the result image 205. In an embodiment, in a case that a ratio of a bounding box for at least one object among the objects exceeds the specified second ratio, the condition determination unit 233 may determine not to output the result image 205. According to an embodiment, the first ratio and the second ratio may be the same. For example, the first ratio and the second ratio may be 50%. However, it is not limited thereto. For example, the first ratio may be higher or lower than the second ratio.

In an embodiment, the condition determination unit 233 may determine whether to output the result image 205 based on comparing the ratio of the bounding box for the specified portion of each of the identified one or more objects with the specified second ratio. In an embodiment, in a case that a ratio of a bounding box for all specified portions is less than or equal to the specified second ratio, the condition determination unit 233 may determine to output the result image 205. In an embodiment, in a case that a ratio of a bounding box for at least one specified portion among the specified portions exceeds the specified second ratio, the condition determination unit 233 may determine not to output the result image 205. According to an embodiment, the first ratio and the second ratio may be the same. For example, the first ratio and the second ratio may be 50%. However, it is not limited thereto. For example, the first ratio may be higher or lower than the second ratio. As a ratio of an area newly generated according to filling processing increases, identity may be recognized as lower. Therefore, identity between objects included in the input image 201 before the filling processing and objects included in the result image 205 after the filling processing may be maintained by different second ratios according to types of objects, and accordingly, a user may not feel awkward between the input image 201 and the output image 205 due to the filling processing.

FIG. 2C is a block diagram of components in an electronic device 101 for determining whether to fill an image based on whether to perform anomaly detection.

Referring to FIG. 2C, an electronic device 101 may include one or more anomaly detectors 215 and 235.

In an embodiment, the anomaly detector 215 may include an autoencoder. In an embodiment, the anomaly detector 215 may identify a first anomaly value based on the autoencoder. In an embodiment, the anomaly detector 215 may identify the first anomaly value based on a difference value between an input image 201 and an output image of the autoencoder. In an embodiment, the autoencoder may be trained based on one or more first images satisfying a specified condition. In an embodiment, the autoencoder may include one or more encoding layers for encoding the input image 201, and one or more decoding layers for decoding an encoding result. In an embodiment, the autoencoder may calculate the difference value between the input image 201 and the output image of the autoencoder. In an embodiment, the autoencoder may identify the difference value as the first anomaly value. However, it is not limited thereto.

In an embodiment, the one or more first images satisfying the specified condition may be an image in which the second number of bounding boxes for a specified portion of each of one or more objects identified in an image is greater than the first number of bounding boxes for the identified one or more objects. In an embodiment, the one or more first images satisfying the specified condition may be an image in which a ratio of the bounding box for the specified portion of each of the one or more objects identified in the image is greater than or equal to a specified first ratio. In an embodiment, the one or more first images satisfying the specified condition may be an image in which the second number of bounding boxes for the specified portion of each of the one or more objects identified in the image is greater than the first number of bounding boxes for the identified one or more objects and the ratio of the bounding box for the specified portion of each of the one or more objects identified in the image is greater than or equal to the specified first ratio. However, it is not limited thereto.

In an embodiment, a condition determination unit 213 may determine whether to perform filling processing for the input image 201 based on the first anomaly value. In an embodiment, the condition determination unit 213 may determine whether to perform the filling processing for the input image 201 based on comparing the first anomaly value with a first reference anomaly value.

In an embodiment, in a case that the first anomaly value is greater than or equal to the first reference anomaly value, the condition determination unit 213 may determine to perform the filling processing for the input image 201. In an embodiment, in a case that the first anomaly value is less than the first reference anomaly value, the condition determination unit 213 may determine not to perform the filling processing for the input image 201.

In an embodiment, the anomaly detector 235 may include an autoencoder. In an embodiment, the anomaly detector 235 may identify a second anomaly value based on the autoencoder. In an embodiment, the anomaly detector 235 may identify the second anomaly value based on a difference value between a result image 205 and an output image of the autoencoder. In an embodiment, the autoencoder may be trained based on one or more second images satisfying a specified condition. In an embodiment, the autoencoder may include one or more encoding layers for encoding the result image 205, and one or more decoding layers for decoding an encoding result. In an embodiment, the autoencoder may calculate the difference value between the result image 205 and the output image of the autoencoder. In an embodiment, the autoencoder may identify the difference value as the second anomaly value. However, it is not limited thereto.

In an embodiment, the one or more second images satisfying the specified condition may be an image in which a ratio of a bounding box for a specified portion of each of one or more objects identified in an image is greater than or equal to a specified second ratio.

In an embodiment, a condition determination unit 233 may determine whether to output the result image 205 based on the first anomaly value. In an embodiment, the condition determination unit 233 may determine whether to output the result image 205 based on comparing the first anomaly value with the first reference anomaly value.

In an embodiment, in a case that the second anomaly value is greater than or equal to a second reference anomaly value, the condition determination unit 233 may determine to output the result image 205. In an embodiment, in a case that the second anomaly value is less than the second reference anomaly value, the condition determination unit 233 may determine not to output the result image 205. According to an embodiment, the first reference anomaly value and the second reference anomaly value may be the same. For example, the first reference anomaly value and the second reference anomaly value may be 0.9. However, it is not limited thereto. For example, the first reference anomaly value may be higher or lower than the second reference anomaly value.

According to an embodiment, through a preprocessor 210, the electronic device 101 may determine whether to perform the filling processing for the input image 201 through a detector (e.g., 211 of FIG. 2B) and/or the anomaly detector 215. In an embodiment, the electronic device 101 may determine whether to perform the filling processing for the input image 201 based on a determination result based on the detector (e.g., 211 of FIG. 2B) and/or a determination result based on the anomaly detector 215.

According to an embodiment, through a post-processor 230, the electronic device 101 may determine whether to perform the filling processing for the input image 201, through a detector (e.g., 231 of FIG. 2B) and/or the anomaly detector 235. In an embodiment, the electronic device 101 may determine whether to output the result image 205 based on a determination result based on the detector (e.g., 231 of FIG. 2B) and/or a determination result based on the anomaly detector 235.

FIG. 3A is a diagram illustrating an example of an input image. FIG. 3B is a diagram illustrating an example of an input image. FIG. 3C is a diagram illustrating an example of an input image.

FIGS. 3A, 3B, and 3C may be described with reference to FIGS. 1, 2A, 2B, and 2C.

Referring to FIG. 3A, a detector 211 may identify objects 321 and 322 in an input image 311. In an embodiment, the detector 211 may identify bounding boxes 331 and 332 for the objects 321 and 322 in the input image 311. In an embodiment, the detector 211 may not identify a specified portion (e.g., a face) for the objects 321 and 322 in the input image 311.

In an embodiment, the detector 211 may set a masking area 351 related to the input image 311. In an embodiment, the detector 211 may set the masking area 351 outside the input image 311 based on an input. In an embodiment, the detector 211 may set the masking area 351 to enlarge a size of the input image 311. For example, the masking area 351 may be an area extending in a direction of a selected side among one or more sides 361, 362, 363, and 364 of the input image 311. For example, the masking area 351 may be an area above the upper side 361 of the input image 311. For example, the masking area 351 may be the area above the upper side 361 of the input image 311 and an area below the lower side 363. For example, the masking area 351 may be the area above the upper side 361 of the input image 311 and an area to the left of the left side 364. For example, the masking area 351 may be an area of a periphery of each of the four sides 361, 362, 363, and 364 of the input image 311.

Referring to FIG. 3B, the detector 211 may identify objects 323 and 324 in an input image 313. In an embodiment, the detector 211 may identify bounding boxes 333 and 334 for the objects 323 and 324 in the input image 313. In an embodiment, the detector 211 may identify a specified portion (e.g., a face) for the partial object 324 of the objects 323 and 324 in the input image 313. In an embodiment, the detector 211 may identify bounding boxes 343 and 344 for the specified portion (e.g., the face) for the objects 323 and 324 in the input image 313.

In an embodiment, the detector 211 may set a masking area 353 related to the input image 313. In an embodiment, the detector 211 may set the masking area 353 outside the input image 313 based on an input. In an embodiment, the detector 211 may set the masking area 353 to enlarge a size of the input image 313. For example, the masking area 353 may be an area extending in a direction of a selected side among one or more sides 361, 362, 363, and 364 of the input image 313.

Referring to FIG. 3C, the detector 211 may identify objects 325 and 326 in an input image 315. In an embodiment, the detector 211 may identify bounding boxes 335 and 336 for the objects 325 and 326 in the input image 315. In an embodiment, the detector 211 may identify specified portions (e.g., a face) for the objects 325 and 326 in the input image 315. In an embodiment, the detector 211 may identify bounding boxes 345 and 346 for the specified portion (e.g., the face) of the objects 325 and 326 in the input image 315.

In an embodiment, the detector 211 may set a masking area 355 related to the input image 315. In an embodiment, the detector 211 may set the masking area 355 outside the input image 315 based on an input. In an embodiment, the detector 211 may set the masking area 355 to enlarge a size of the input image 315. For example, the masking area 355 may be an area extending in a direction of a selected side among one or more sides 361, 362, 363, and 364 of the input image 315.

In an embodiment, a condition determination unit 213 may determine whether to perform filling processing for each of the input images 311, 313, and 315 based on the bounding boxes 331, 332, 333, 334, 335, 336, 343, 344, 345, and 346.

In an embodiment, the condition determination unit 213 may determine whether to perform the filling processing for each of the input images 311, 313, and 315 based on the first number of the bounding boxes 331, 332, 333, 334, 335, and 336 for the identified one or more objects 321, 322, 323, 324, 325, and 326 and the second number of the bounding boxes 343, 344, 345, and 346 for a specified portion (e.g., a head) of each of the identified one or more objects 321, 322, 323, 324, 325, and 326. In an embodiment, in a case that the second number of the bounding boxes 343, 344, 345, and 346 of the face is greater than or equal to the first number of the bounding boxes 331, 332, 333, 334, 335, and 336 of the bodies 321, 322, 323, 324, 325, and 326, the condition determination unit 213 may determine to perform the filling processing for each of the input images 311, 313, and 315. In an embodiment, in a case that the second number of the bounding boxes 343, 344, 345, and 346 of the face is less than the first number of the bounding boxes 331, 332, 333, 334, 335, and 336 of the bodies 321, 322, 323, 324, 325, and 326, the condition determination unit 213 may determine not to perform the filling processing for each of the input images 311, 313, and 315.

Referring to FIG. 3A, in an embodiment, since the second number (i.e., 0) of the input image 311 is less than the first number (i.e., 2), the condition determination unit 213 may determine not to perform the filling processing for the input image 311. Referring to FIG. 3B, in an embodiment, since the second number (i.e., 2) of the input image 313 is greater than or equal to the first number (i.e., 2), the condition determination unit 213 may determine to perform the filling processing for the input image 313. Referring to FIG. 3C, in an embodiment, since the second number (i.e., 2) of the input image 315 is greater than or equal to the first number (i.e., 2), the condition determination unit 213 may determine to perform the filling processing for the input image 315.

In an embodiment, the condition determination unit 213 may determine whether to perform the filling processing for each of the input images 311, 313, and 315 based on a ratio of the bounding boxes 344, 345, and 346 for the specified portion (e.g., the head) of each of the identified one or more objects 321, 322, 323, 324, 325, and 326. In an embodiment, the ratio of the bounding box may mean a ratio between a total size of the bounding box and a size of an area of a bounding box positioned in the input images 311, 313, and 315. For example, the ratio of the bounding box 343 may be 60%. For example, the ratio of the bounding box 344 may be 30%. For example, the ratio of the bounding box 345 may be 90%. For example, the ratio of the bounding box 346 may be 70%.

Referring to FIG. 3A, in an embodiment, since the bounding box for the specified portion (e.g., the head) of the input image 311 is not present, the condition determination unit 213 may determine not to perform the filling processing for the input image 311. Referring to FIG. 3B, in an embodiment, since the ratio (i.e., 60%) of the bounding box 344 of the input image 315 is greater than or equal to a first reference ratio (e.g., 50%), but the ratio (i.e., 30%) of the bounding box 344 is less than the first reference ratio (e.g., 50%), the condition determination unit 213 may determine not to perform the filling processing for the input image 315. Referring to FIG. 3C, in an embodiment, since the ratios (i.e., 90% and 70%) of the bounding boxes 345 and 346 of the input image 315 are greater than or equal to the first reference ratio (e.g., 50%), the condition determination unit 213 may determine to perform the filling processing for the input image 315.

In an embodiment, the condition determination unit 213 may determine whether to perform filling processing for an input image 201 based on a comparison result between the first number and the second number and a ratio of the bounding box for the specified portion. In an embodiment, in a case that the second number of the bounding boxes 343, 344, 345, and 346 of the face is less than the first number of the bounding boxes 331, 332, 333, 334, 335, and 336 of the bodies 321, 322, 323, 324, 325, and 326, the condition determination unit 213 may determine not to perform the filling processing for each of the images 311, 313, and 315. In an embodiment, in a case that a ratio of the bounding boxes 343, 344, 345, and 346 of the face is less than a specified first ratio, the condition determination unit 213 may determine not to perform the filling processing for each of the images 311, 313, and 315. In an embodiment, in a case that the second number of the bounding boxes 343, 344, 345, and 346 of the face is greater than or equal to the first number of the bounding boxes 331, 332, 333, 334, 335, and 336 of the bodies 321, 322, 323, 324, 325, and 326, and the ratio of the bounding boxes 343, 344, 345, and 346 of the face is greater than or equal to the specified first ratio, the condition determination unit 213 may determine to perform the filling processing for each of the images 311, 313, and 315.

Referring to FIG. 3A, in an embodiment, since the second number (i.e., 0) of the input image 311 is less than the first number (i.e., 2) and the bounding box for the specified portion (e.g., the head) of the input image 311 is not present, the condition determination unit 213 may determine not to perform the filling processing for the input image 311. Referring to FIG. 3B, in an embodiment, since the ratio (i.e., 60%) of the bounding box 343 of the input image 315 is greater than or equal to the first reference ratio (e.g., 50%), and the second number (i.e., 2) of the input image 313 is greater than or equal to the first number (i.e., 2), but the ratio (i.e., 30%) of the bounding box 344 is less than the first reference ratio (e.g., 50%), the condition determination unit 213 may determine not to perform the filling processing for the input image 313. Referring to FIG. 3C, in an embodiment, since the second number (i.e., 2) of the input image 315 is greater than or equal to the first number (i.e., 2) and the ratios (i.e., 90% and 70%) of the bounding boxes 345 and 346 of the input image 315 are greater than or equal to the first reference ratio (e.g., 50%), the condition determination unit 213 may determine to perform the filling processing for the input image 315.

FIG. 3D is a diagram illustrating an example of a landmark. FIG. 3E is a diagram illustrating an example of a landmark.

FIGS. 3D and 3E may be described with reference to FIGS. 1, 2A, 2B, and 2C.

Referring to FIG. 3D, an image 301 may represent a human face. In an embodiment, an electronic device 101 may identify one or more landmarks 303, 304, 305, 306, 307, and 308 included in the human face. In an embodiment, the electronic device 101 may generate a bounding box 302 based on the one or more landmarks 303, 304, 305, 306, 307, and 308 included in the human face. In an embodiment, the electronic device 101 may generate the bounding box 302 surrounding the one or more landmarks 303, 304, 305, 306, 307, and 308 included in the human face. In an embodiment, the electronic device 101 may identify a ratio of the human face included in the bounding box based on the number of identified landmarks among the one or more landmarks 303, 304, 305, 306, 307, and 308 included in the human face.

In an embodiment, the electronic device 101 may identify a degree of rotation of the human face based on the identified landmarks among the one or more landmarks 303, 304, 305, 306, 307, and 308 included in the human face. For example, in a case that the left eye 304, a left mouth, the left ear 306, a nose base, and a left cheek are identified, the electronic device 101 may identify that the human face has rotated approximately 36 degrees to the right. For example, in a case that the left eye 304, the right eye 305, the left mouth, a partial area of the left ear 306, the nose base, and the left cheek are identified, the electronic device 101 may identify that the human face has rotated approximately 12 to 36 degrees to the right.

In FIG. 3D, the human face is illustrated as an example of a specified portion of an object, but this is merely an example. According to an embodiment, the object may be an animal or an article other than the human. In addition, the specified portion of the object may be a head, a portion of a body, and a portion of the article other than the face. In addition, according to the object, landmarks for the specified portion may be set.

In FIG. 3D, the human is illustrated as an example of an object, but this is merely an example. According to an embodiment, the object may be an animal or an article other than the human. In addition, according to the object, landmarks for the object may be set.

An image 360 of FIG. 3E may represent positions of landmarks. In an embodiment, the electronic device 101 may identify one or more landmarks included in a human. In an embodiment, the electronic device 101 may generate a bounding box based on the one or more landmarks included in the human. In an embodiment, the electronic device 101 may generate the bounding box surrounding the one or more landmarks included in the human. In an embodiment, the electronic device 101 may identify a ratio of a human included in the bounding box based on the number of identified landmarks among the one or more landmarks included in the human. For example, in FIG. 3E, only landmarks for a right arm among landmarks of the human may be identified. Accordingly, a bounding box 365 surrounding the landmarks for the right arm may be generated. In an embodiment, the electronic device 101 may identify a ratio of a human included in the bounding box 365 according to a ratio (e.g., a number ratio) of the identified landmarks for the right arm among the landmarks of the human.

In an embodiment, the electronic device 101 may identify a degree of rotation of a human based on identified landmarks among one or more landmarks included in the human.

FIG. 3F is a diagram illustrating an example of an input image.

FIG. 3F may be described with reference to FIGS. 1, 2A, 2B, and 2C.

Referring to FIG. 3F, a detector 211 may identify objects 327 and 328 in an input image 317. In an embodiment, the detector 211 may identify bounding boxes 337 and 338 for the objects 327 and 328 in the input image 317. In an embodiment, the detector 211 may identify a specified portion for the objects 327 and 328 in the input image 317.

In an embodiment, the detector 211 may set a masking area 357 related to the input image 317. In an embodiment, the detector 211 may set the masking area 357 outside the input image 317 based on an input. In an embodiment, the detector 211 may set the masking area 357 to enlarge a size of the input image 317. For example, the masking area 357 may be an area extending in a direction of a selected side among one or more sides 361, 362, 363, and 364 of the input image 317. For example, the masking area 357 may be an area above the upper side 361 of the input image 317. For example, the masking area 357 may be the area above the upper side 361 of the input image 317 and an area below the lower side 363. For example, the masking area 357 may be the area above the upper side 361 of the input image 317 and an area to the left of the left side 364. For example, the masking area 357 may be an area of a periphery of each of the four sides 361, 362, 363, and 364 of the input image 317.

In an embodiment, a condition determination unit 213 may determine whether to perform filling processing for the input image 317 based on bounding boxes 337, 338, and 347.

In an embodiment, the condition determination unit 213 may determine whether to perform the filling processing for the input image 317 based on the first number of the bounding boxes 337, 338, and 347 for the identified one or more objects 327 and 328 and the second number of the bounding boxes 347 for a specified portion (e.g., a head) of each of the identified one or more objects 337, 338, and 347. In an embodiment, in a case that the second number of bounding boxes of a face is less than the first number of bounding boxes of a body, the condition determination unit 213 may determine not to perform the filling processing for the input image 317. In an embodiment, in a case that a ratio of a bounding box for at least one object among the objects is less than a specified first ratio, the condition determination unit 213 may determine not to perform the filling processing for the input image 317. In an embodiment, in a case that the second number of the bounding boxes of the face is greater than or equal to the first number of the bounding boxes of the body and a ratio of the bounding box of the face is greater than or equal to the specified first ratio, the condition determination unit 213 may determine to perform the filling processing for the input image 317.

In an embodiment, the condition determination unit 213 may identify the second number as 1 based on the number of the bounding boxes of the face of the input image 317. In an embodiment, the condition determination unit 213 may identify the first number as 1 based on the number of the bounding boxes of the body of the input image 317. In an embodiment, since the second number (i.e., 1) of the input image 317 is greater than or equal to the first number (i.e., 1), the condition determination unit 213 may determine to perform the filling processing for the input image 317.

In an embodiment, the condition determination unit 213 may determine whether to perform the filling processing for the input image 317 based on a ratio of the bounding boxes 337 and 338 for each of the identified one or more objects 327 and 328. In an embodiment, the ratio of the bounding box may mean a ratio between a total size of the bounding box and a size of an area of a bounding box positioned in the input image 317. For example, the ratio of the bounding box may mean a ratio between a size of a bounding box positioned in a masking area and a size of an area of a bounding box positioned in the input image 317. For example, the ratio of the bounding box may mean a ratio of a landmark included in the bounding box (or included in the input image 317) among specified landmarks of an object or a specified portion of the object. For example, since the bounding box 337 includes only a body above legs of the human body 327, a ratio of the bounding box 337 may be 60%. For example, the bounding box 337 may include only 60% of landmarks (e.g., landmarks of the upper body) among all landmarks of the human body 327. For example, since the bounding box 338 includes only a front portion of a car, a ratio of the bounding box 338 may be 30%.

In an embodiment, since the ratio (i.e., 60%) of the bounding box 337 for the object 327 of the input image 317 is greater than or equal to a first reference ratio (e.g., 50%) for the object, the condition determination unit 213 may determine to perform the filling processing for the input image 317. In an embodiment, since the ratio (i.e., 30%) of the bounding box 338 for the object 328 of the input image 317 is greater than or equal to a first reference ratio (e.g., 20%) for the object, the condition determination unit 213 may determine to perform the filling processing for the input image 317.

In an embodiment, the condition determination unit 213 may determine whether to perform the filling processing for the input image 317 based on a ratio of the bounding box 347 for the specified portion (e.g., the head) of each of the identified one or more objects 327 and 328. In an embodiment, the ratio of the bounding box may mean a ratio between a total size of the bounding box and a size of an area of a bounding box positioned in the input image 317. For example, the ratio of the bounding box 347 may be 100%. In an embodiment, the bounding box 347 may include all landmarks of the head.

In an embodiment, since the ratio (i.e., 100%) of the bounding box 347 for the specified portion (e.g., the head) of the input image 317 is greater than or equal to a first reference ratio (e.g., 50%), the condition determination unit 213 may determine to perform the filling processing for the input image 315.

In an embodiment, the condition determination unit 213 may determine whether to perform the filling processing for an input image 207 based on a comparison result between the first number and the second number and a ratio of the bounding box for the specified portion.

In an embodiment, the condition determination unit 213 may identify the second number as 1 based on the number of the bounding boxes of the face of the input image 317. In an embodiment, the condition determination unit 213 may identify the first number as 1 based on the number of the bounding boxes of the body of the input image 317. In an embodiment, since the second number (i.e., 1) of the input image 317 is greater than or equal to the first number (i.e., 1) and the ratio (i.e., 100%) of the bounding box 347 for the specified portion (e.g., the head) of the input image 317 is greater than or equal to the first reference ratio (e.g., 50%), and the ratios (i.e., 60% and 30%) of the bounding boxes 337 and 338 of the objects 327 and 328 of the input image 317 is greater than or equal to the first reference ratio (e.g., 50% or 20%), the condition determination unit 213 may determine to perform the filling processing for the input image 317.

In FIG. 3F, the two objects 327 and 328 and the one specified portion 347 have been described, but this is merely an example. According to an embodiment, the electronic device 101 may determine whether to perform the filling processing for the input image 207 according to the number of bounding boxes and/or a ratio of a bounding box for all objects included in the image 317.

FIG. 4A is a diagram illustrating an example of a result image. FIG. 4B is a diagram illustrating an example of a result image. FIG. 4C is a diagram illustrating an example of a result image.

FIGS. 4A, 4B, and 4C may be described with reference to FIGS. 1, 2A, 2B, and 2C.

Referring to FIG. 4A, a detector 231 may identify objects 421 and 422 in a result image 411. In an embodiment, the detector 231 may identify a specified portion (e.g., a face) for the objects 421 and 422 in the result image 411. In an embodiment, the detector 231 may identify bounding boxes 441 and 442 for the specified portion (e.g., the face) of the objects 421 and 422 in the result image 411.

Referring to FIG. 4B, the detector 231 may identify objects 423 and 424 in a result image 413. In an embodiment, the detector 231 may identify a specified portion (e.g., a face) for the objects 423 and 424 in the result image 413. In an embodiment, the detector 231 may identify bounding boxes 443 and 444 for the specified portion (e.g., the face) of the objects 423 and 424 in the result image 413. In FIG. 4A, an upper portion of a nose of the face included in the bounding box 441 is newly generated, whereas in FIG. 4B, an upper portion of eyes of the face included in the bounding box 443 may be newly generated.

Referring to FIG. 4C, the detector 231 may identify objects 425 and 426 in a result image 415. In an embodiment, the detector 231 may identify specified portions (e.g., a face) for the objects 425 and 426 in the result image 415. In an embodiment, the detector 231 may identify bounding boxes 445 and 446 for the specified portion (e.g., the face) of the objects 425 and 426 in the result image 415.

In an embodiment, a condition determination unit 233 may determine whether to output each of the result images 411, 413, and 415 based on the bounding boxes 441, 442, 443, 444, 445, and 446.

In an embodiment, the condition determination unit 233 may determine whether to output each of the result images 411, 413, and 415 based on a ratio of the bounding boxes 441, 442, 443, 444, 445, and 446 for a specified portion (e.g., a head) of each of the identified one or more objects 421, 422, 423, 424, 425, and 426. In an embodiment, the ratio of the bounding box may mean a ratio between a total size of the bounding box and a size of a bounding box positioned in partial images 451, 453, and 455 generated by a masking area positioned in the result images 411, 413, and 415. For example, the ratio of the bounding box may mean a ratio of a bounding box positioned in the masking area in the result images 411, 413, and 415. In an embodiment, the masking area may be an area excluding input images 401, 403, and 405 from the result images 411, 413, and 415. For example, the bounding box 441 may include a head whose lower portion of a nose is present in the input image 401 and whose upper portion of the nose is newly generated. Accordingly, a ratio of landmarks included in a newly generated area among all landmarks of the head in the bounding box 441 may be 60%. For example, the bounding box 443 may include a head whose lower portion of eyes is present in the input image 403 and whose upper portion of the eyes is newly generated. Accordingly, a ratio of landmarks included in a newly generated area among all landmarks of the head in the bounding box 443 may be 50%. For example, the bounding box 445 may include a head whose lower portion of a crown of the head is present in the input image 405 and whose upper portion of the crown of the head is newly generated. Accordingly, a ratio of an area of landmarks included in a newly generated area among all landmarks of the head in the bounding box 445 may be 10%. For example, a ratio of each of the bounding boxes 441, 442, 443, 444, 445, and 446 may be 60, 80, 50, 60, 10, and 50%.

In an embodiment, since the ratios (i.e., 100% and 80%) of the bounding boxes 441 and 442 for the specified portion (e.g., head) of the result image 411 exceeds a second reference ratio (e.g., 50%), the condition determination unit 233 may determine not to output the result image 411. In an embodiment, since the ratio (i.e., 80%) of the bounding box 443 among the bounding boxes 443 and 444 of the result image 415 exceeds the second reference ratio (e.g., 50%), the condition determination unit 233 may determine not to output the result image 415. In an embodiment, since the ratios (i.e., 50% and 30%) of the bounding boxes 445 and 446 of the result image 415 are less than or equal to the second reference ratio (e.g., 50%), the condition determination unit 233 may determine to output the result image 415.

FIG. 4D is a diagram illustrating an example of a result image.

FIG. 4D may be described with reference to FIGS. 1, 2A, 2B, and 2C.

Referring to FIG. 4D, the detector 231 may identify objects 427 and 428 in a result image 417. In an embodiment, the detector 231 may identify bounding boxes 437 and 438 for the objects 427 and 428 in the result image 417.

In an embodiment, the detector 231 may identify a specified portion (e.g., a face) for the objects 427 and 428 in the result image 417. In an embodiment, the detector 231 may identify a bounding box 447 for the specified portion (e.g., the face) of the objects 427 and 428 in the result image 417.

In an embodiment, the condition determination unit 233 may determine whether to output the result image 417 based on the bounding boxes 437, 438, and 447.

In an embodiment, the condition determination unit 233 may determine whether to output the result image 417 based on a ratio of the bounding boxes 437 and 438 for each of the identified one or more objects 427 and 428. In an embodiment, the ratio of the bounding box may mean a ratio between a total size of the bounding box and a size of a bounding box positioned in a partial image 457 generated by a masking area positioned in the result image 417. For example, the ratio of the bounding box may mean a ratio of a bounding box positioned in the masking area in the result image 417. In an embodiment, the masking area may be an area excluding the input image 407 from the result image 417. For example, the bounding box 437 may include a body whose upper portion of legs is present in the input image 407 and whose portion between the legs and knees is newly generated. Accordingly, a ratio of landmarks included in a newly generated area among all landmarks of the body in the bounding box 437 may be 20%. For example, the bounding box 438 may include a car that a front portion of the car is present in the input image 407 and a middle portion of the car is newly generated. Accordingly, a ratio of landmarks included in a newly generated area among all landmarks of the car in the bounding box 438 may be 20%. For example, in the bounding box 447, all portions of the head may be present in the input image 407, and a newly generated portion may not be present. Accordingly, a ratio of landmarks included in a newly generated area among all landmarks of the head in the bounding box 447 may be 0%. For example, the ratio of each of the bounding boxes 437, 438, and 447 may be 20, 20, 0%.

In an embodiment, since the ratios (i.e., 20% and 70%) of the bounding boxes 437 and 438 for each of the identified one or more objects 427 and 428 of the result image 417 is less than or equal to second reference ratios (e.g., 50% and 80%), the condition determination unit 233 may determine to output the result image 417.

In an embodiment, the condition determination unit 233 may determine whether to output the result image 417 based on the ratio of the bounding box 447 for the specified portion (e.g., the head) of each of the identified one or more objects 427 and 428.

In an embodiment, since the ratio (i.e., 0%) of the bounding box 447 for the specified portion (e.g., the head) of the result image 417 is less than or equal to a second reference ratio (e.g., 50%), the condition determination unit 233 may determine to output the result image 417.

In FIG. 4D, the two objects 427 and 428 and the one specified portion 447 have been described, but this is merely an example. According to an embodiment, an electronic device 101 may determine whether to output the result image 417 according to a ratio of a bounding box for all objects included in the image 417.

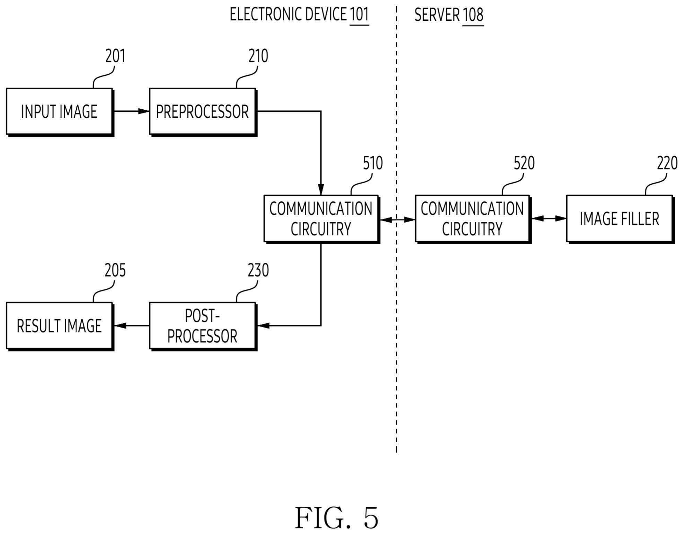

FIG. 5 is a block diagram of components of an electronic device 101 and a server 108 for generating a result image.

Compared with FIG. 2A, FIG. 5 may represent an embodiment in which some functions of the electronic device 101 are implemented by the server 108. For example, the filling processing of the electronic device 101 exemplified through FIG. 2A may be performed in the server 108. However, it is not limited thereto. For example, at least one of the preprocessing operation, the filling processing, or the post-processing operation of the electronic device 101 exemplified in FIG. 2A may be performed in 108.

Hereinafter, the description of the configurations described with reference to FIG. 2A among configurations illustrated in FIG. 5 may be simplified.

Referring to FIG. 5, the electronic device 101 may include a preprocessor 210, a post-processor 230, and communication circuitry 510. In an embodiment, the preprocessor 210 may correspond to the preprocessor 210 of FIGS. 2A, 2B, or 2C. In an embodiment, the post-processor 230 may correspond to the post-processor 230 of FIGS. 2A, 2B, or 2C. In an embodiment, the communication circuitry 510 may correspond to the communication module 190 of FIG. 1.

In an embodiment, the preprocessor 210 may determine whether to perform filling processing for an input image 201. In an embodiment, the preprocessor 210 may set a masking area related to the input image 201.

In an embodiment, the preprocessor 210 may transmit data on the input image 201 and the masking area to the server 108. In an embodiment, the server 108 may correspond to the server 108 of FIG. 1.

In an embodiment, the server 108 may include an image filler 220 and communication circuitry 520. In an embodiment, the image filler 220 may correspond to the image filler 220 of FIG. 2A. In an embodiment, the communication circuitry 520 may correspond to the communication module 190 of FIG. 1.

In an embodiment, the image filler 220 may include a generative artificial intelligence (AI) model. In an embodiment, the image filler 220 may generate a result image 205 for the input image 201 based on the generative AI model. In an embodiment, the result image 205 may include a partial image (or a filled image) generated by a masking area. In an embodiment, the result image 205 may include the partial image (or the filled image) and the input image 201.

In an embodiment, the server 108 may transmit the result image 205 to the communication circuitry 510 of the electronic device 101 through the communication circuitry 520. In an embodiment, the electronic device 101 may determine whether to output the result image 205 through the post-processor 230.

FIG. 6A is a diagram illustrating an example of an input image and a masking area. FIG. 6B is a diagram illustrating an example of an image for a masking area transmitted from a server 108 to an electronic device 101. FIG. 6C is a diagram illustrating an example of a result image combined by an electronic device 101.

FIGS. 6A, 6B, and 6C may be described with reference to FIGS. 1 and 5. FIGS. 6A and 6C may be related to an operation performed in the electronic device 101, and FIG. 6B may be related to an operation performed in the server 108.

Referring to FIG. 6A, the electronic device 101 may identify a masking area 651 for an input image 611. In an embodiment, the masking area 651 may be an area in which filling processing for the input image 611 is performed.

In an embodiment, the electronic device 101 may identify an area 612 corresponding to the input image 611 in an entire area 652 of a result image to be generated. Herein, the result image to be generated may be an image generated by performing filling processing for the masking area 651 for the input image 611.

In an embodiment, the electronic device 101 may transmit data on the input image 611, the masking area 651, and the area 612 to the server 108. Data on the area 612 may include position information of the area 612 among the entire area 652 of the result image to be generated.

Referring to FIG. 6B, the server 108 may generate a result image 623. In an embodiment, the server 108 may generate the result image 623 based on the input image 611 and the masking area 651. In an embodiment, the server 108 may generate the result image 623 using an image filler (e.g., 220 of FIG. 5). In an embodiment, the server 108 may generate the result image 623 for the input image 611 based on a generative AI model of the image filler (e.g., 220 of FIG. 5). In an embodiment, the result image 623 may include a partial image (or a filled image) generated by the masking area 651. In an embodiment, the result image 623 may include the partial image (or the filled image) for the masking area 651 and the input image 611. In an embodiment, the server 108 may identify an object and/or a specified portion of the object based on one or more landmarks of the object identified in the input image 611. In an embodiment, the server 108 may identify an area (or a bounding box) including the specified portion of the object. In an embodiment, the server 108 may determine whether to perform the filling processing for the input image 201 based on the bounding box. In an embodiment, the server 108 may determine whether to perform the filling processing for the input image 611 based on the number of bounding boxes and/or a ratio of a bounding box for identified one or more objects. However, it is not limited thereto. In an embodiment, the server 108 may determine whether to perform the filling processing for the input image 611 based on whether to perform anomaly detection.

In an embodiment, the server 108 may generate an image 624 obtained by removing (or excluding) a portion 634 corresponding to the area 612 from the result image 623. In an embodiment, the server 108 may transmit the image 624 to the electronic device 101.

Referring to FIG. 6C, the electronic device 101 may combine the input image 611 with the image 624. In an embodiment, the electronic device 101 may combine the input image 611 with the remaining portion 634 excluding a portion generated by the masking area 651 in the result image 623.

In an embodiment, the electronic device 101 may adjust the image 624 so that transparency decreases (or opacity increases) as it moves away from a peripheral portion of the remaining portion 634, and may adjust the input image 611 so that transparency decreases (or opacity increases) as it moves away from the peripheral portion of the remaining portion 634 that is excluded. Herein, in the image 624, a direction moving away from the peripheral portion of the remaining portion 634 may be an outward direction of the remaining portion 634. In the input image 611, a direction moving away from the peripheral portion of the remaining portion 634 may be an inward direction of the remaining portion 634. In an embodiment, by adjusting the transparency of the image 624 and/or the input image 611, the electronic device 101 may enable the image 624 and the input image 611 to be combined more smoothly.

In an embodiment, the electronic device 101 may combine the input image 611 having the decreased transparency (or the increased opacity) with the image 624 having the decreased transparency (or the increased opacity).

As described above, the electronic device 101 may use less data than when directly receiving the result image 623, by receiving the image 624, from the server 108, in which the portion 634 of a size corresponding to the input image 611 is excluded from the result image 623.

FIG. 7A is a diagram illustrating an example of an input for an object included in an input image. FIG. 7B is a diagram illustrating an example of a masking area and a result image determined according to an input. FIG. 7C is a diagram illustrating an example of a masking area and a result image determined according to an input.

FIGS. 7A, 7B, and 7C may be described with reference to FIGS. 1, 2A, 2B, and 2C.

In an embodiment, an electronic device 101 may display an input image 711 through a display module 160.

In an embodiment, the electronic device 101 may obtain an input 740 for the input image 711. In an embodiment, the electronic device 101 may obtain the input 740 for an object 721 included in the input image 711. In an embodiment, the electronic device 101 may obtain the input 740 for changing a position and/or a size of the object 721 included in the input image 711.

In an embodiment, the electronic device 101 may separate (or segment) the selected object 721 from the input image 711 based on the input 740.

In an embodiment, the electronic device 101 may move an object 725 separated from the object 721 on the input image 711 based on the input 740. In an embodiment, the electronic device 101 may display the object 725 moved (and/or reduced) from the object 721 on the input image 711 based on the input 740.

In an embodiment, based on the input 740, the electronic device 101 may identify a masking area in which filling processing is to be performed in relation to the input image 711. The masking area may include an area of the object 721 selected from the input image 711. The masking area may include an area 735 adjacent to an area of the object 725 moved from the input image 711. In an embodiment, in a case that the selected object 721 is positioned at a periphery (e.g., a side) of the input image 711, the adjacent area 735 may include an area extending in a direction of the side from an area in which the selected object 721 is moved. In an embodiment, a size of the adjacent area 735 may be set based on a type of the selected object 721. In an embodiment, the size of the adjacent area 735 may include an area of a portion that is not identified in an article identified based on the type of the selected object 721. For example, in a case that the type of selected object 721 is a human and a leg is not identified from the human, the adjacent area 735 may include an area of the leg. In an embodiment, the unidentified portion may be identified by one or more landmarks set for the type of the selected object 721. However, it is not limited thereto. For example, the adjacent area 735 may be identified by an additional user input.

In an embodiment, the electronic device 101 may perform filling processing for the identified masking area (e.g., the area of the selected object 721). In an embodiment, in a case of being determined to perform filling processing for the input image 711, the electronic device 101 may perform filling processing for the identified masking area (e.g., the area of the selected object 721). For example, referring to FIG. 7B, the electronic device 101 may perform filling processing for a masking area 731 associated with the selected object 721. The electronic device 101 may generate a result image 713 by performing the filling processing for the masking area 731. Referring to FIG. 7B, the result image 713 may include the object 725 moved by the input 740 and a portion 751 filled for the masking area 731. Referring to FIG. 7B, as filling processing for the area 735 adjacent to the moved object 725 is not performed, a lower portion 755 of the moved object 725 of the result image 713 may not be filled with a portion (e.g., a leg) that is not identified in the moved object 725.

In an embodiment, the electronic device 101 may perform the filling processing for the masking area associated with the selected object 721 and the adjacent area 735. In an embodiment, in a case of being determined to perform the filling processing for the input image 711, the electronic device 101 may perform the filling processing for the masking area 731 associated with the selected object 721 and the adjacent area 735. For example, referring to FIG. 7C, the electronic device 101 may perform the filling processing for the masking area 731 associated with the selected object 721 and the adjacent area 735. The electronic device 101 may generate a result image 715 by performing the filling processing for the area 731 and the adjacent area 735. Referring to FIG. 7C, the result image 715 may include the object 725 moved by the input 740 and a portion 761 filled for the area 731. Referring to FIG. 7C, by performing the filling processing for the area 735 adjacent to the moved object 725, a lower portion 765 of the moved object 725 of the result image 715 may be filled with a portion (e.g., a leg) that is not identified in the moved object 725.

FIG. 8A is a diagram illustrating an example of an input for an object included in an input image. FIG. 8B is a diagram illustrating an example of a masking area and a result image determined according to an input. FIG. 8C is a diagram illustrating an example of a masking area and a result image determined according to an input. FIG. 8D is a diagram illustrating an example of a masking area and a result image determined according to an input.

FIGS. 8A, 8B, 8C, and 8D may be described with reference to FIGS. 1, 2A, 2B, and 2C.

In an embodiment, the electronic device 101 may display an input image 811 through a display module 160.

In an embodiment, the electronic device 101 may obtain an input 840 for the input image 811. In an embodiment, the electronic device 101 may obtain the input 840 for an object 821 included in the input image 811. In an embodiment, the electronic device 101 may obtain the input 840 for changing a position and/or a size of the object 821 included in the input image 811.

In an embodiment, based on the input 840, the electronic device 101 may display an object 825 moved (and/or reduced) from the object 821 on the input image 811.

In an embodiment, based on the input 840, the electronic device 101 may identify a masking area in which filling processing is to be performed in relation to the input image 811. The masking area may include an area of the object 821 selected from the input image 811. The masking area may be set based on the area of the object 821 selected from the input image 811 and/or the moved (and/or reduced) object 825. In an embodiment, in a case that the object 825 at least partially overlaps the area of the selected object 821, the electronic device 101 may identify a remaining area of the area of the selected object 821 excluding an area overlapped by the object 825 as the masking area.

According to an embodiment, in a case that the object 825 at least partially overlaps the area of the selected object 821, the electronic device 101 may identify the area of the selected object 821 as the masking area, or may identify the remaining area of the area of the selected object 821 excluding the area overlapped by the object 825 as the masking area. According to whether the area overlapped by the object 825 is excluded, a performance result of filling processing may vary.

FIG. 8B may exemplify result images 813 and 814 generated according to a situation in which the electronic device 101 identifies an area 831 of the selected object 821 as the masking area in a case that the object 825 at least partially overlaps the area of the selected object 821. FIG. 8C may exemplify result images 816 and 817 generated according to a situation in which the electronic device 101 identifies the remaining area of the area 831 of the selected object 821 excluding an area 835 overlapped by the object 825 as the masking area in a case that the object 825 at least partially overlaps the area of the selected object 821. In an embodiment, as the overlapped area 835 is excluded, an original area may be maintained in the generated result images 816 and 817.

Referring to FIG. 8B, as filling processing is performed in the masking area without information about the object 825, the result images 813 and 814 may be filled with leaves 851 and 852 related to a landscape other than a human. Referring to FIG. 8C, as filling processing is performed in the masking area based on information about the object 825, the result images 816 and 817 may be filled with humans 853 and 854.

Referring to FIG. 8C, as the filling processing is performed in the masking area, in the result images 813 and 814, a description of an object 829 may be slightly different from that of the object 825 of the input image 811. According to an embodiment, the electronic device 101 may combine the input image 811 with the result images 816 and 817 to maintain a shape of the object 825.

Referring to FIG. 8D, the electronic device 101 may combine the input image 811 with the result images 816 and 817. In an embodiment, the electronic device 101 may combine the object 825 of the input image 811 with the overlapping area 835 overlapping the result images 816 and 817.

In an embodiment, the electronic device 101 may adjust the result images 816 and 817 so that transparency decreases (or opacity increases) as it moves away from a peripheral portion of the overlapping area 835, and may adjust the input image 811 so that transparency decreases (or opacity increases) as it moves away from the peripheral portion of the overlapping area 835. Herein, in the result images 816 and 817, a direction moving away from the peripheral portion of the overlapping area 835 may be an outward direction of the overlapping area 835. In the input image 811, a direction moving away from the peripheral portion of the overlapping area 835 may be an inward direction of the overlapping area 835.

In an embodiment, the electronic device 101 may combine the input image 811 having the decreased transparency (or the increased opacity) with the result images 816 and 817 having the decreased transparency (or the increased opacity). In an embodiment, the electronic device 101 may combine an area of the object 825 of the input image 811 having the decreased transparency (or the increased opacity) with the result images 816 and 817 having the decreased transparency (or the increased opacity).

As described above, the electronic device 101 may prevent an object included in the input image 811 from disappearing from the result image by setting a masking area based on movement of the object 821. In addition, as described above, the electronic device 101 may prevent a description of the moved object 825 from being change in the result image by inserting the moved object 825 in the masking area.

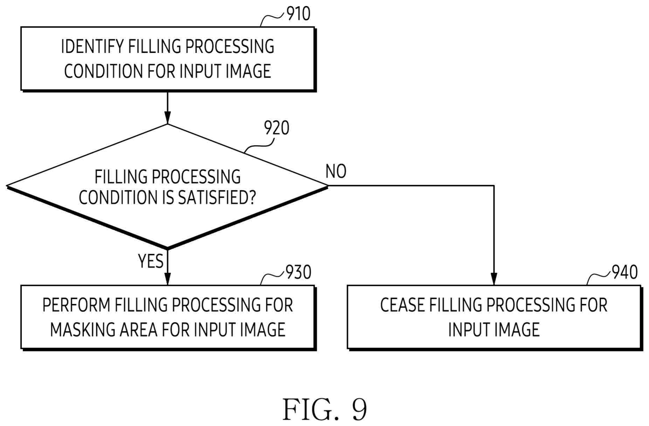

FIG. 9 is a flowchart exemplifying an operation of an electronic device according to an embodiment.

FIG. 9 may be described with reference to FIGS. 1, 2A, 2B, and 2C.

Referring to FIG. 9, in operation 910, an electronic device 101 may identify a filling processing condition for an input image. In an embodiment, the filling processing condition may be related to a state of one or more objects included in the input image. For example, the state of the object may include a size and/or a ratio of the object in the input image. In an embodiment, the filling processing condition may be based on an anomaly value of the input image. In an embodiment, the electronic device 101 may include one or more detectors for identifying different types of objects. In an embodiment, based on a type of identified object being different from a human or a portion of a body (e.g., a face) of the human, the electronic device 101 may identify the object based on a detector for identifying the object of the different type other than the human or the portion of the body of the human.

In an embodiment, the electronic device 101 may identify the filling processing condition for the input image based on the number of objects identified in the input image. For example, the electronic device 101 may identify the filling processing condition for the input image based on comparing the first number of objects identified in the input image with the second number of specified portions (e.g., a head) of the object. For example, in a case that the object is a human, the specified portion of the object may be a body portion of the human (e.g., a face, eyes, a nose, a mouth, ears, arms, or hands). For example, in a case that the object is an animal, the specified portion of the object may be a body portion of the animal (e.g., a head, eyes, a nose, a mouth, ears, or legs). For example, in a case that the object is an article, the specified portion of the object may be a portion of a component of the article (e.g., in a case of a car, a bonnet, a wheel, a window, or a door). However, it is not limited thereto.

In an embodiment, the electronic device 101 may identify the filling processing condition for the input image based on a ratio of an object identified in the input image. For example, the ratio of the object may mean a ratio of an object identified in the input image among all objects. For example, the ratio of the object may mean a ratio of a landmark identified in the input image among specified landmarks of the object. For example, in a case that the object is a human, a specified landmark of the human may be a nose, eyes, ears, a mouth, shoulders, elbows, wrists, fingers, hips, knees, ankles, heels, and/or feet.

In an embodiment, the electronic device 101 may identify the filling processing condition for the input image based on a ratio of the specified portion of the object identified in the input image. For example, the ratio of the specified portion of the object may mean a ratio of a specified portion identified in the input image among all specified portions. For example, the ratio of the specified portion may mean a ratio of a landmark identified in the input image among specified landmarks of the specified portion. For example, in a case that the specified portion of the object is a face of the human, a specified landmark of the face may be a nose, eyes, ears, and/or a mouth. However, it is not limited thereto.

In operation 920, the electronic device 101 may determine whether the filling processing condition is satisfied.

In an embodiment, in a case that the second number of the specified portions of the object identified in the input image is greater than or equal to the first number of the objects identified in the input image, the electronic device 101 may determine to perform filling processing for the input image. In an embodiment, in a case that the second number of the specified portions of the object identified in the input image is less than the first number of the objects identified in the input image, the electronic device 101 may determine not to perform the filling processing for the input image.

In an embodiment, in a case that a ratio of all objects is greater than or equal to a specified first ratio, the electronic device 101 may determine to perform the filling processing for the input image. In an embodiment, in a case that a ratio of at least one object among the objects is less than the specified first ratio, the electronic device 101 may determine not to perform the filling processing for the input image. In an embodiment, the first ratios may be set differently according to an object. In an embodiment, the first ratio for a human, an animal, or an article may be different. For example, the first ratio for a human, a dog, or a car may be 80%, 40%, or 20%. In an embodiment, the first ratio may be predetermined according to difficulty of the filling processing. In an embodiment, the difficulty of the filling processing may depend on whether identity between an image before the filling processing and an image after the filling processing is recognized. For example, in a case of an object (e.g., a face of a human) that the identity is recognized as lower as a ratio of an area newly generated according to the filling processing increases, the difficulty of the filling processing may be understood to be higher. In an embodiment, the difficulty of the filling processing may be different according to a type (or a class) of an object that is a target of filling. For example, in a case that the difficulty of the filling processing is high, it may have the higher first ratio.

In an embodiment, in a case that a ratio of all specified portions is greater than or equal to the specified first ratio, the electronic device 101 may determine to perform the filling processing for the input image. In an embodiment, in a case that a ratio of at least one specified portion of the specified portions is less than the specified first ratio, the electronic device 101 may determine not to perform the filling processing for the input image. In an embodiment, the first ratios may be set differently according to a specified portion of the object. In an embodiment, the first ratio for a specified portion of a human, an animal, or an article may be different. For example, the first ratio for a face of the human and a hand of the human, or a shoulder of the human may be 60%, 90% or 20%. However, it is not limited thereto. In an embodiment, the first ratio may be predetermined according to the difficulty of the filling processing. For example, in a case that the difficulty of the filling processing is high, it may have the higher first ratio.

In the operation 920, in response to identifying that the filling processing condition is satisfied, the electronic device 101 may perform operation 930. In the operation 920, in response to identifying that the filling processing condition is not satisfied, the electronic device 101 may perform operation 940.

In the operation 930, the electronic device 101 may perform filling processing for a masking area for the input image.

In an embodiment, the electronic device 101 may set a masking area related to the input image. In an embodiment, the electronic device 101 may set a masking area outside the input image and/or a masking area inside the input image based on an input. In an embodiment, the electronic device 101 may set a masking area related to an object selected based on a user input for the input image. For example, the masking area may be an area of the object selected from the input image. For example, the masking area may be set based on the area of the object selected from the input image and/or a moved (and/or reduced) object. For example, in a case that an object at least partially overlaps the area of the selected object, the masking area may be a remaining area of the area of the selected object excluding an area overlapped by the object. For example, the masking area may include an area adjacent to an area of the object moved in the input image. In an embodiment, in a case that the selected object is positioned at a periphery (e.g., a side) of the input image, the adjacent area may include an area extending in a direction of the side from an area in which the selected object is moved. In an embodiment, a size of the adjacent area may be set based on a type of the selected object. In an embodiment, the size of the adjacent area may include an area of a portion that is not identified in an article identified based on the type of the selected object. For example, in a case that the type of selected object is a human and a leg is not identified from the human, the adjacent area may include an area of the leg. However, it is not limited thereto. In an embodiment, the electronic device 101 may set the masking area to enlarge a size of the input image. For example, the masking area may be an area extending in a direction of a selected side among one or more sides of the input image.

In an embodiment, the electronic device 101 may generate a result image for the input image based on a generative artificial intelligence (AI) model. In an embodiment, the generative AI model may be a model capable of newly drawing an image in the masking area based on the input image. For example, the generative AI model may newly draw an image in the masking area related to the input image based on at least one prompt. Herein, the prompt may include at least one keyword related to the input image. The prompt may include at least one keyword that may be extracted from the input image. Herein, the keyword may be a word (or a sentence) for describing the input image and/or at least one object included in the input image. In an embodiment, the result image may include a partial image (or a filled image) generated by the masking area. In an embodiment, the result image may include the partial image (or the filled image) and the input image.

In the operation 940, the electronic device 101 may cease the filling processing for the input image. Herein, ceasing the filling processing for the input image may include not performing the filling processing for the input image. Ceasing the filling processing for the input image may include refraining from performing the filling processing for the input image.

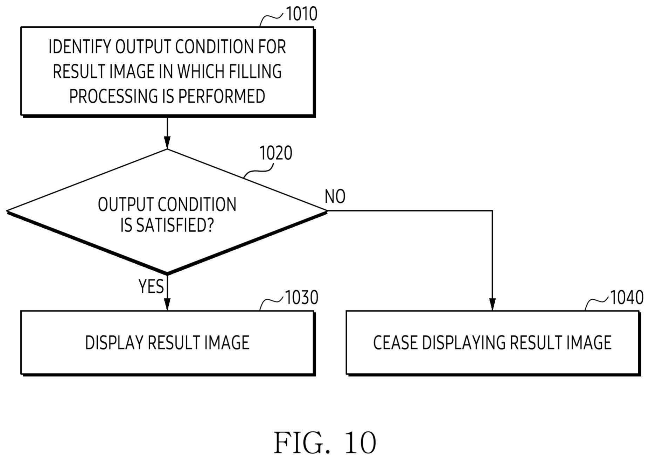

FIG. 10 is a flowchart exemplifying an operation of an electronic device according to an embodiment.

FIG. 10 may be described with reference to FIGS. 1, 2A, 2B, and 2C.

Referring to FIG. 10, in operation 1010, an electronic device 101 may identify an output condition for a result image in which filling processing is performed. In an embodiment, the output condition may be related to a state of one or more objects included in an input image. For example, the state of the object may include a size and/or a ratio of an object in an output image. In an embodiment, the output condition may be based on an anomaly value of the output image.

In an embodiment, the electronic device 101 may identify a filling processing condition for the output image based on a ratio of an object identified in the output image. For example, the ratio of the object may mean a ratio of an object identified in a masking area of the output image among all objects. For example, the ratio of the object may mean a ratio of a landmark identified in the masking area of the output image among specified landmarks of the object. For example, in a case that the object is a human, a specified landmark of the human may be a nose, eyes, ears, a mouth, shoulders, elbows, wrists, fingers, hips, knees, ankles, heels, and/or feet.

In an embodiment, the electronic device 101 may identify the filling processing condition for the output image based on a ratio of a specified portion of the object identified in the output image. For example, the ratio of the specified portion of the object may mean a ratio of a specified portion identified in the masking area of the output image among all specified portions. For example, the ratio of the specified portion may mean a ratio of a landmark identified in the masking area of the output image among specified landmarks of the specified portion. For example, in a case that the specified portion of the object is a face of the human, a specified landmark of the face may be a nose, eyes, ears, and/or a mouth. However, it is not limited thereto.

In operation 1020, the electronic device 101 may determine whether the output condition is satisfied.

In an embodiment, in a case that a ratio of all objects is less than a specified second ratio, the electronic device 101 may determine to output the output image. In an embodiment, in a case that a ratio of at least one object among the objects is greater than or equal to the specified second ratio, the electronic device 101 may determine to cease outputting the output image. In an embodiment, the second ratios may be set differently according to an object. In an embodiment, the second ratio for a human, an animal, or an article may be different. For example, the second ratio for a human, a dog, or a car may be 20%, 60%, or 80%. In an embodiment, the second ratio may be predetermined according to difficulty of filling processing. For example, in a case that the difficulty of the filling processing is high, it may have the higher first ratio.

In an embodiment, in a case that a ratio of all specified portions is less than the specified second ratio, the electronic device 101 may determine to output the output image. In an embodiment, in a case that a ratio of at least one specified portion of the specified portions is greater than or equal to the specified second ratio, the electronic device 101 may determine to cease outputting the output image. In an embodiment, the second ratios may be set differently according to a specified portion of the object. In an embodiment, the second ratio for a specified portion of a human, an animal, or an article may be different. For example, the second ratio for a face of the human and a hand of the human, or a shoulder of the human may be 40%, 10%, or 80%. However, it is not limited thereto. In an embodiment, the second ratio may be predetermined according to the difficulty of the filling processing. For example, in a case that the difficulty of the filling processing is high, it may have the higher second ratio.

In the operation 1020, in response to identifying that the output condition is satisfied, the electronic device 101 may perform operation 1030. In the operation 1020, in response to identifying that the output condition is not satisfied, the electronic device 101 may perform operation 1040.

In the operation 1030, the electronic device 101 may display a result image. The electronic device 101 may display the result image through the display module 160. According to an embodiment, the electronic device 101 may store the result image in memory 130.

In the operation 1040, the electronic device 101 may cease displaying the result image. According to an embodiment, the electronic device 101 may delete the result image from the memory 130.

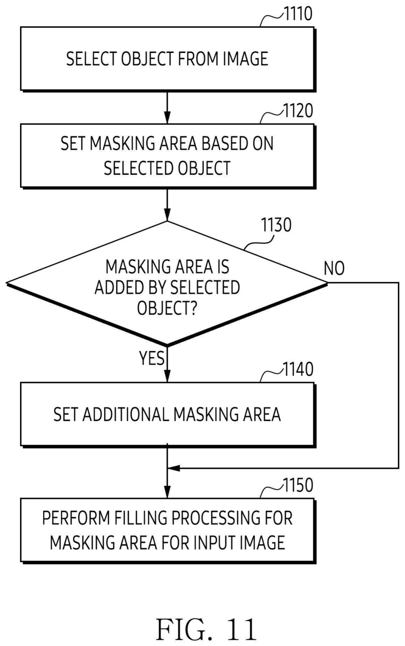

FIG. 11 is a flowchart exemplifying an operation of an electronic device according to an embodiment.

FIG. 11 may be described with reference to FIGS. 1, 2A, 2B, and 2C.

Referring to FIG. 11, in operation 1110, an electronic device 101 may select an object from an image. The electronic device 101 may select an object based on an input among one or more objects included in the image. The electronic device 101 may separate (or segment) the selected object from the image. In an embodiment, the object may be a human, an animal, and/or an article.

In an embodiment, the electronic device 101 may move an object separated from an object on an input image based on an input. In an embodiment, based on an input, the electronic device 101 may display, on the input image, the object moved (and/or reduced) from the object.

In operation 1120, the electronic device 101 may set a masking area based on the selected object. In an embodiment, based on an input, the electronic device 101 may identify a masking area in which filling processing is to be performed in the input image. The masking area may include an area of the object selected by the input in the input image.

In operation 1130, the electronic device 101 may identify whether addition of a masking area is required by the selected object.

In an embodiment, the electronic device 101 may identify that the addition of the masking area is required based on at least one landmark among specified landmarks being not identified in the selected object. For example, in a case that the selected object is a human and a landmark related to a leg is not identified in the selected object, the electronic device 101 may identify that addition of a masking area for the leg is required.

In the operation 1130, in response to identifying that the addition of the masking area is required by the selected object, the electronic device 101 may perform operation 1140. In the operation 1130, in response to identifying that the addition of the masking area is not required by the selected object, the electronic device 101 may perform operation 1150.

In the operation 1140, the electronic device 101 may set an additional masking area. In an embodiment, based on an input, the electronic device 101 may identify an additional masking area in which filling processing is to be performed in relation to the input image. The additional masking area may include an area adjacent to an area of the object moved in the input image. In an embodiment, in a case that the selected object is positioned at a periphery (e.g., a side) of the input image, the adjacent area may include an area extending in a direction of the side from an area in which the selected object is moved. In an embodiment, a size of the adjacent area may be set based on a type of the selected object. In an embodiment, the size of the adjacent area may include an area of a portion that is not identified in an article identified based on the type of the selected object. For example, in a case that the type of selected object is a human and a leg is not identified from the human, the adjacent area may include an area of the leg. In an embodiment, the unidentified portion may be identified by one or more landmarks set for the type of the selected object. However, it is not limited thereto. For example, the adjacent area may be identified by an additional user input.

In operation 1150, the electronic device 101 may perform filling processing for the masking area for the input image.

In an embodiment, the electronic device 101 may generate a result image for the input image based on a generative artificial intelligence (AI) model. In an embodiment, the electronic device 101 may fill an image in the masking area based on the selected object based on the generative AI model. In an embodiment, the electronic device 101 may fill an image in the additional masking area adjacent to the object moved from the selected object based on the generative AI model.

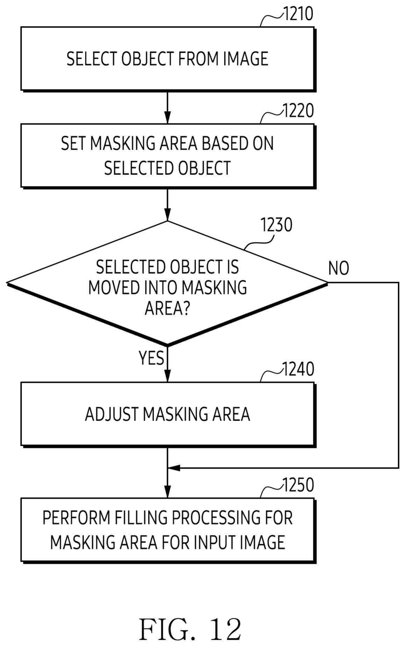

FIG. 12 is a flowchart exemplifying an operation of an electronic device according to an embodiment.

FIG. 12 may be described with reference to FIGS. 1, 2A, 2B, and 2C.

Referring to FIG. 12, in operation 1210, an electronic device 101 may select an object from an image. The electronic device 101 may select an object based on an input among one or more objects included in the image. The electronic device 101 may separate (or segment) the selected object from the image. In an embodiment, the object may be a human, an animal, and/or an article.

In an embodiment, the electronic device 101 may move an object separated from an object on the input image based on an input. In an embodiment, based on an input, the electronic device 101 may display, on the input image, the object moved (and/or reduced) from the object.

In operation 1220, the electronic device 101 may set a masking area based on the selected object. In an embodiment, based on an input, the electronic device 101 may identify a masking area in which filling processing is to be performed in the input image. The masking area may include an area of the object selected by the input in the input image.

In operation 1230, the electronic device 101 may identify whether the selected object is moved into the masking area.

In the operation 1230, in response to identifying that the selected object is moved into the masking area, the electronic device 101 may perform operation 1240. In the operation 1230, in response to identifying that the selected object is not moved into the masking area, the electronic device 101 may perform operation 1250.

In the operation 1240, the electronic device 101 may adjust a masking area. The electronic device 101 may set an area excluding an area in which the selected object is moved in the masking area based on the selected object as a masking area. In an embodiment, in a case that the moved object at least partially overlaps an area of the selected object, the electronic device 101 may identify a remaining area of the area of the selected object excluding an area overlapped by the moved object as a masking area.

In the operation 1250, the electronic device 101 may perform filling processing for the masking area for the input image.

In an embodiment, the electronic device 101 may generate a result image for the input image based on a generative artificial intelligence (AI) model. In an embodiment, the electronic device 101 may fill an image in the masking area in which a partial area is excluded from the area based on the selected object based on the generative AI model. Herein, the partial area may be the area overlapped by the moved object in the area of the selected object.

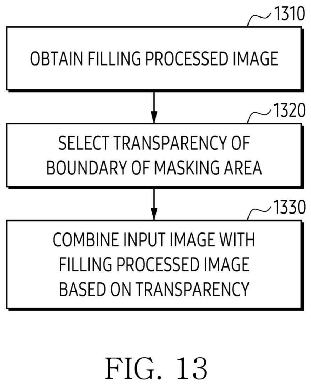

FIG. 13 is a flowchart exemplifying an operation of an electronic device according to an embodiment.

FIG. 13 may be described with reference to FIGS. 1, 2A, 2B, and 2C.

Referring to FIG. 13, in operation 1310, an electronic device 101 may obtain a filling processed image.

In operation 1320, the electronic device 101 may select transparency of a boundary of a masking area.

In an embodiment, the electronic device 101 may adjust the obtained filling processed image so that transparency decreases (or opacity increases) as it moves away from a peripheral portion of the masking area, and may adjust an input image so that transparency decreases (or opacity increases) as it moves away from the peripheral portion of the masking area. Herein, in the filling processed image, a direction moving away from the peripheral portion of the masking area may be an outward direction of the masking area. In the input image, a direction moving away from the peripheral portion of the masking area may be an inward direction of the masking area.

In operation 1330, the electronic device 101 may combine the input image with the filling processed image based on the transparency.

In an embodiment, the electronic device 101 may combine the input image having the decreased transparency (or the increased opacity) with the filling processed image having the decreased transparency (or the increased opacity). In an embodiment, the electronic device 101 may combine an area of an object of the input image having the decreased transparency (or the increased opacity) with the filling processed image having the decreased transparency (or the increased opacity).

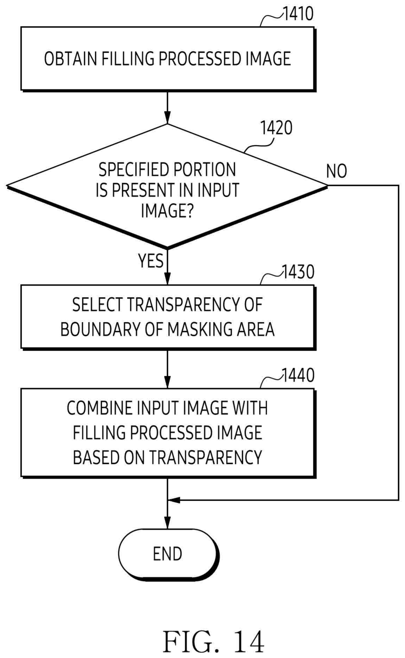

FIG. 14 is a flowchart exemplifying an operation of an electronic device according to an embodiment.

FIG. 14 may be described with reference to FIGS. 1, 2A, 2B, and 2C.

Referring to FIG. 14, in operation 1410, an electronic device 101 may obtain a filling processed image.

In operation 1420, the electronic device 101 may identify whether a specified portion is present in an input image. For example, the specified portion may be a face (or a head) and/or a skeleton point (e.g., a portion corresponding to a landmark).

In the operation 1420, in response to identifying that the specified portion is present, the electronic device 101 may perform operation 1430. In the operation 1420, in response to identifying that the specified portion is not present, the electronic device 101 may terminate an operation of FIG. 14.

In the operation 1430, the electronic device 101 may select transparency of a boundary of the specified portion.

In an embodiment, the electronic device 101 may adjust the obtained filling processed image so that transparency decreases (or opacity increases) as it moves away from the boundary of the specified portion, and may adjust the input image so that transparency decreases (or opacity increases) as it moves away from the boundary of the specified portion. Herein, in the filling processed image, a direction moving away from the boundary of the specified portion may be an inward direction of an area of the specified portion. In the input image, a direction moving away from the boundary of the specified portion may be an outward direction of the area of the specified portion.

In operation 1440, the electronic device 101 may combine the specified portion with the filling processed image based on transparency.

In an embodiment, the electronic device 101 may combine the specified portion of the input image having the decreased transparency (or the increased opacity) with the filling processed image having the decreased transparency (or the increased opacity).

As described above, an electronic device 101 may comprise a display 160. The electronic device 101 may comprise a processor 120. The electronic device 101 may comprise memory 130 storing instructions. The instructions may be configured, when executed by the processor 120, to cause the electronic device 101 to obtain a result image 411, 413, 415, or 417 generated by filling processing for an input image 311, 313, 315, or 317, based on that a first ratio of an object 321 or 322 present in the input image 311, 313, 315, or 317 is greater than or equal to a first reference ratio. The instructions may be configured, when executed by the processor 120, to cause the electronic device 101 to refrain from displaying the result image 411, 413, 415, or 417 through the display 160 based on that a second ratio of a newly filled portion of the object 321 or 322 exceeds a second reference ratio. The instructions may be configured, when executed by the processor 120, to cause the electronic device 101 to, based on that the second ratio is less than or equal to the second reference ratio, display the result image 411, 413, 415, or 417 through the display 160.

The instructions may be configured, when executed by the processor 120, to cause the electronic device 101 to, in response to that the first ratio is greater than or equal to the first reference ratio, obtain the result image 411, 413, 415, or 417. The instructions may be configured, when executed by the processor 120, to cause the electronic device 101 to, in response to that the first ratio is less than the first reference ratio, refrain from obtaining the result image 411, 413, 415, or 417.

The instructions may be configured, when executed by the processor 120, to cause the electronic device 101 to, in response to that the first number of specified portions of the object 321 or 322 included in the input image 311, 313, 315, or 317 is greater than the second number of objects 321 or 322, obtain the result image 411, 413, 415, or 417. The instructions may be configured, when executed by the processor 120, to cause the electronic device 101 to, in response to that the first number is less than or equal to the second number, refrain from obtaining the result image 411, 413, 415, or 417.

The electronic device 101 may further comprise communication circuitry 190. The instructions may be configured, when executed by the processor 120, to cause the electronic device 101 to identify a masking area 351, 353, 355, or 357 of the input image 311, 313, 315, or 317 on which the filling processing is to be performed. The instructions may be configured, when executed by the processor 120, to cause the electronic device 101 to transmit data representing the input image 311, 313, 315, or 317 and information about the masking area 351, 353, 355, or 357 to a server 108 through the communication circuitry 190. The instructions may be configured, when executed by the processor 120, to cause the electronic device 101 to obtain the result image 411, 413, 415, or 417 generated by the filling processing for the masking area 351, 353, 355, or 357 of the input image 311, 313, 315, or 317 from the server 108.

The electronic device 101 may further comprise communication circuitry 190. The instructions may be configured, when executed by the processor 120, to cause the electronic device 101 to identify a masking area 351, 353, 355, or 357 of the input image 311, 313, 315, or 317 on which the filling processing is to be performed. The instructions may be configured, when executed by the processor 120, to cause the electronic device 101 to transmit data representing the input image 311, 313, 315, or 317 and information about the masking area 351, 353, 355, or 357 to a server 108 through the communication circuitry 190. The instructions may be configured, when executed by the processor 120, to cause the electronic device 101 to obtain another image generated by the filling processing for the masking area 351, 353, 355, or 357 of the input image 311, 313, 315, or 317 from the server 108. The instructions may be configured, when executed by the processor 120, to cause the electronic device 101 to obtain the result image 411, 413, 415, or 417 by combining the another image and the input image.

The masking area 351, 353, 355, or 357 may include a first area of another object 321 or 322 selected in the input image 311, 313, 315, or 317. The masking area 351, 353, 355, or 357 may exclude a second area of the another object 321 or 322 that is moved on the input image 311, 313, 315, or 317 that overlaps the first area.

The masking area 351, 353, 355, or 357 may include a first area adjacent to a second area of the another object 321 or 322, selected in the input image 311, 313, 315, or 317, that is moved on the input image 311, 313, 315, or 317. The first area may be an area of a portion that is not identified in the another object 321 or 322 of the input image 311, 313, 315, or 317.

As described above, an electronic device 101 may comprise a display 160. The electronic device 101 may comprise a processor 120. The electronic device 101 may comprise memory 130 storing instructions. The instructions may be configured, when executed by the processor 120, to cause the electronic device 101 to obtain a first anomaly value of an input image 311, 313, 315, or 317 through a first anomaly detection module 215. The first anomaly detection module 215 may be trained by images in which a first ratio of an object 321 or 322 is greater than or equal to a first reference ratio. The instructions may be configured, when executed by the processor 120, to cause the electronic device 101 to obtain a result image 411, 413, 415, or 417 generated by filling processing for the input image 311, 313, 315, or 317, based on that the first anomaly value is less than or equal to a first reference anomaly value. The instructions may be configured, when executed by the processor 120, to cause the electronic device 101 to obtain a second anomaly value of the result image 411, 413, 415, or 417 through a second anomaly detection module 235. The second anomaly detection module 235 may be trained by images in which a second ratio of an object 321 or 322 is greater than or equal to a specified second reference ratio. The instructions may be configured, when executed by the processor 120, to cause the electronic device 101 to refrain from displaying the result image 411, 413, 415, or 417 through the display 160 based on that the second anomaly value is greater than or equal to a second reference anomaly value. The instructions may be configured, when executed by the processor 120, to cause the electronic device 101 to, based on that the second anomaly value is less than the second reference anomaly value, display the result image 411, 413, 415, or 417 through the display 160.

As described above, a method may be executed by an electronic device 101 including a display 160. The method may comprise obtaining a result image 411, 413, 415, or 417 generated by filling processing for an input image 311, 313, 315, or 317, based on that a first ratio of an object 321 or 322 present in the input image 311, 313, 315, or 317 is greater than or equal to a first reference ratio. The method may comprise refraining from displaying the result image 411, 413, 415, or 417 through the display 160 based on that a second ratio of a newly filled portion of the object 321 or 322 exceeds a second reference ratio. The method may comprise, based on that the second ratio is less than or equal to the second reference ratio, displaying the result image 411, 413, 415, or 417 through the display 160.

The method may comprise, in response to that the first ratio is greater than or equal to the first reference ratio, obtaining the result image 411, 413, 415, or 417. The method may comprise, in response to that the first ratio is less than the first reference ratio, refraining from obtaining the result image 411, 413, 415, or 417.

The method may comprise, in response to that the first number of specified portions of the object 321 or 322 included in the input image 311, 313, 315, or 317 is greater than the second number of objects 321 or 322, obtaining the result image 411, 413, 415, or 417. The method may comprise, in response to that the first number is less than or equal to the second number, refraining from obtaining the result image 411, 413, 415, or 417.

The method may comprise identifying a masking area 351, 353, 355, or 357 of the input image 311, 313, 315, or 317 on which the filling processing is to be performed. The method may comprise transmitting data representing the input image 311, 313, 315, or 317 and information about the masking area 351, 353, 355, or 357 to a server 108 through communication circuitry 190 of the electronic device 101. The method may comprise obtaining the result image 411, 413, 415, or 417 generated by the filling processing for the masking area 351, 353, 355, or 357 of the input image 311, 313, 315, or 317 from the server 108.

The method may comprise identifying a masking area 351, 353, 355, or 357 of the input image 311, 313, 315, or 317 on which the filling processing is to be performed. The method may comprise transmitting data representing the input image 311, 313, 315, or 317 and information about the masking area 351, 353, 355, or 357 to a server 108 through communication circuitry 190 of the electronic device 101. The method may comprise obtaining another image generated by the filling processing for the masking area 351, 353, 355, or 357 of the input image 311, 313, 315, or 317 from the server 108. The method may comprise obtaining the result image 411, 413, 415, or 417 by combining the another image and the input image.

The masking area 351, 353, 355, or 357 may include a first area of another object 321 or 322 selected in the input image 311, 313, 315, or 317. The masking area 351, 353, 355, or 357 may exclude a second area of the another object 321 or 322 that is moved on the input image 311, 313, 315, or 317 that overlaps the first area.

The masking area 351, 353, 355, or 357 may include a first area adjacent to a second area of the another object 321 or 322, selected in the input image 311, 313, 315, or 317, that is moved on the input image 311, 313, 315, or 317. The first area may be an area of a portion that is not identified in the another object 321 or 322 of the input image 311, 313, 315, or 317.

As described above, a method may be executed by an electronic device 101 including a display 160. The method may comprise obtaining a first anomaly value of an input image 311, 313, 315, or 317 through a first anomaly detection module 215. The first anomaly detection module 215 may be trained by images in which a first ratio of an object 321 or 322 is greater than or equal to a first reference ratio. The method may comprise obtaining a result image 411, 413, 415, or 417 generated by filling processing for the input image 311, 313, 315, or 317, based on that the first anomaly value is less than or equal to a first reference anomaly value. The method may comprise obtaining a second anomaly value of the result image 411, 413, 415, or 417 through a second anomaly detection module 235. The second anomaly detection module 235 may be trained by images in which a second ratio of an object 321 or 322 is greater than or equal to a specified second reference ratio. The method may comprise refraining from displaying the result image 411, 413, 415, or 417 through the display 160 based on that the second anomaly value is greater than or equal to a second reference anomaly value. The method may comprise, based on that the second anomaly value is less than the second reference anomaly value, displaying the result image 411, 413, 415, or 417 through the display 160.

As described above, a non-transitory computer readable recording medium may store a program including instructions. The instructions may be configured, when executed by a processor 120 of an electronic device 101 including a display 160, to cause the electronic device 101 to obtain a result image 411, 413, 415, or 417 generated by filling processing for an input image 311, 313, 315, or 317, based on that a first ratio of an object 321 or 322 present in the input image 311, 313, 315, or 317 is greater than or equal to a first reference ratio. The instructions may be configured, when executed by the processor 120, to cause the electronic device 101 to refrain from displaying the result image 411, 413, 415, or 417 through the display 160 based on that a second ratio of a newly filled portion of the object 321 or 322 exceeds a second reference ratio. The instructions may be configured, when executed by the processor 120, to cause the electronic device 101 to, based on that the second ratio is less than or equal to the second reference ratio, display the result image 411, 413, 415, or 417 through the display 160.

As described above, a non-transitory computer readable recording medium may store a program including instructions. The instructions may be configured, when executed by a processor 120 of an electronic device 101 including a display 160, to cause the electronic device 101 to obtain a first anomaly value of an input image 311, 313, 315, or 317 through a first anomaly detection module 215. The first anomaly detection module 215 may be trained by images in which a first ratio of an object 321 or 322 is greater than or equal to a first reference ratio. The instructions may be configured, when executed by the processor 120, to cause the electronic device 101 to obtain a result image 411, 413, 415, or 417 generated by filling processing for the input image 311, 313, 315, or 317, based on that the first anomaly value is less than or equal to a first reference anomaly value. The instructions may be configured, when executed by the processor 120, to cause the electronic device 101 to obtain a second anomaly value of the result image 411, 413, 415, or 417 through a second anomaly detection module 235. The second anomaly detection module 235 may be trained by images in which a second ratio of an object 321 or 322 is greater than or equal to a specified second reference ratio. The instructions may be configured, when executed by the processor 120, to cause the electronic device 101 to refrain from displaying the result image 411, 413, 415, or 417 through the display 160 based on that the second anomaly value is greater than or equal to a second reference anomaly value. The instructions may be configured, when executed by the processor 120, to cause the electronic device 101 to, based on that the second anomaly value is less than the second reference anomaly value, display the result image 411, 413, 415, or 417 through the display 160.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101), comprising:
display (160),
a processor, and
memory (130) storing instructions, wherein the instructions are configured, when executed by the processor, to cause the electronic device (101) to:
obtain a result image (411, 413, 415, 417) generated by filling processing for an input image (311, 313, 315, 317), based on that a first ratio of an object (321, 322) present in the input image (311, 313, 315, 317) is greater than or equal to a first reference ratio,
refrain from displaying the result image (411, 413, 415, 417) through the display (160) based on that a second ratio of a newly filled portion of the object (321, 322) exceeds a second reference ratio, and
based on that the second ratio is less than or equal to the second reference ratio, display (160) the result image (411, 413, 415, 417) through the display (160).

2. The electronic device (101) of claim 1,
wherein the instructions are configured, when executed by the processor, to cause the electronic device (101) to:
in response to that the first ratio is greater than or equal to the first reference ratio, obtain the result image (411, 413, 415, 417), and
in response to that the first ratio is less than the first reference ratio, refrain from obtaining the result image (411, 413, 415, 417).

3. The electronic device (101) of claim 2,
wherein the instructions are configured, when executed by the processor, to cause the electronic device (101) to:
in response to that the first number of specified portions of the object (321, 322) included in the input image (311, 313, 315, 317) is greater than the second number of object (321, 322)s, obtain the result image (411, 413, 415, 417), and
in response to that the first number is less than or equal to the second number, refrain from obtaining the result image (411, 413, 415, 417).

4. The electronic device (101) of any one of claims 1 to 3, further comprising:
communication circuitry (190),
wherein the instructions are configured, when executed by the processor, to cause the electronic device (101) to:
identify a masking area of the input image (311, 313, 315, 317) on which the filling processing is to be performed,
transmit data representing the input image (311, 313, 315, 317) and information about the masking area to a server through the communication circuitry (190), and
obtain the result image (411, 413, 415, 417) generated by the filling processing for the masking area of the input image (311, 313, 315, 317) from the server.

5. The electronic device (101) of any one of claims 1 to 4, further comprising:
communication circuitry (190),
wherein the instructions are configured, when executed by the processor, to cause the electronic device (101) to:
identify a masking area (351, 353, 355, 357) of the input image (311, 313, 315, 317) on which the filling processing is to be performed,
transmit data representing the input image (311, 313, 315, 317) and information about the masking area (351, 353, 355, 357) to a server (108) through the communication circuitry (190),
obtain another image generated by the filling processing for the masking area (351, 353, 355, 357) of the input image (311, 313, 315, 317) from the server (108), and
obtain the result image (411, 413, 415, 417) by combining the another image and the input image (311, 313, 315, 317).

6. The electronic device (101) of claim 5,
wherein the masking area (351, 353, 355, 357) includes a first area of another object (321, 322) selected in the input image (311, 313, 315, 317), and
wherein the masking area (351, 353, 355, 357) excludes a second area of the another object (321, 322) that is moved on the input image (311, 313, 315, 317) that overlaps the first area.

7. The electronic device (101) of claim 5,
wherein the masking area (351, 353, 355, 357) includes a first area adjacent to a second area of the another object (321, 322), selected in the input image (311, 313, 315, 317), that is moved on the input image (311, 313, 315, 317), and
wherein the first area is an area of a portion that is not identified in the another object (321, 322) of the input image (311, 313, 315, 317).

8. An electronic device (101), comprising:
display (160),
processor, and
memory (130) storing instructions, wherein the instructions are configured, when executed by the processor, to cause the electronic device (101) to:
obtain a first anomaly value of an input image (311, 313, 315, 317) through a first anomaly detection module (215), the first anomaly detection module (215) being trained by images in which a first ratio of an object (321, 322) is greater than or equal to a first reference ratio,
obtain a result image (411, 413, 415, 417) generated by filling processing for the input image (311, 313, 315, 317), based on that the first anomaly value of the input image (311, 313, 315, 317) is less than or equal to a first reference anomaly value,
obtain a second anomaly value of the result image (411, 413, 415, 417) through a second anomaly detection module (235), the second anomaly detection module (235) being trained by images in which a second ratio of an object (321, 322) is greater than or equal to a specified second reference ratio,
refrain from displaying the result image (411, 413, 415, 417) through the display (160) based on that the second anomaly value is greater than or equal to a second reference anomaly value, and
based on that the second anomaly value is less than the second reference anomaly value, display (160) the result image (411, 413, 415, 417) through the display (160).

9. The electronic device (101) of claim 8, further comprising:
communication circuitry (190),
wherein the instructions are configured, when executed by the processor, to cause the electronic device (101) to:
identify a masking area (351, 353, 355, 357) of the input image (311, 313, 315, 317) on which the filling processing is to be performed,
transmit data representing the input image (311, 313, 315, 317) and information about the masking area (351, 353, 355, 357) to a server (108) through the communication circuitry (190), and
obtain the result image (411, 413, 415, 417) generated by the filling processing for the masking area (351, 353, 355, 357) of the input image (311, 313, 315, 317) from the server (108).

10. The electronic device (101) of claim 8 or claim 9, further comprising:
communication circuitry (190),
wherein the instructions are configured, when executed by the processor, to cause the electronic device (101) to:
identify a masking area (351, 353, 355, 357) of the input image (311, 313, 315, 317) on which the filling processing is to be performed,
transmit data representing the input image (311, 313, 315, 317) and information about the masking area (351, 353, 355, 357) to a server (108) through the communication circuitry (190),
obtain another image generated by the filling processing for the masking area (351, 353, 355, 357) of the input image (311, 313, 315, 317) from the server (108), and
obtain the result image (411, 413, 415, 417) by combining the another image and the input image (311, 313, 315, 317).

11. The electronic device (101) of claim 10,
wherein the masking area (351, 353, 355, 357) includes a first area of another object (321, 322) selected in the input image (311, 313, 315, 317), and
wherein the masking area (351, 353, 355, 357) excludes a second area of the another object (321, 322) that is moved on the input image (311, 313, 315, 317) that overlaps the first area.

12. The electronic device (101) of claim 10,
wherein the masking area (351, 353, 355, 357) includes a first area adjacent to a second area of the another object (321, 322), selected in the input image (311, 313, 315, 317), that is moved on the input image (311, 313, 315, 317), and
wherein the first area is an area of a portion that is not identified in the another object (321, 322) of the input image (311, 313, 315, 317).

13. A method executed by an electronic device (101) including a display (160), comprising:
obtaining a result image (411, 413, 415, 417) generated by filling processing for an input image (311, 313, 315, 317), based on that a first ratio of an object (321, 322) present in the input image (311, 313, 315, 317) is greater than or equal to a first reference ratio,
refraining from displaying the result image (411, 413, 415, 417) through the display (160) based on that a second ratio of a newly filled portion of the object (321, 322) exceeds a second reference ratio, and
based on that the second ratio is less than or equal to the second reference ratio, displaying the result image (411, 413, 415, 417) through the display (160).

14. The method of claim 13, further comprising:
in response to that the first ratio is greater than or equal to the first reference ratio, obtaining the result image (411, 413, 415, 417), and
in response to that the first ratio is less than the first reference ratio, refraining from obtaining the result image (411, 413, 415, 417).

15. The method of claim 13 or claim 14, further comprising:
in response to that the first number of specified portions of the object (321, 322) included in the input image (311, 313, 315, 317) is greater than the second number of object (321, 322)s, obtaining the result image (411, 413, 415, 417), and
in response to that the first number is less than or equal to the second number, refraining from obtaining the result image (411, 413, 415, 417).
